(19) Europäisches Patentamt / European Patent Office / Office européen des brevets

(11) **EP 4 518 422 A1**

(12) **EUROPEAN PATENT APPLICATION**
published in accordance with Art. 153(4) EPC

(43) Date of publication:
**05.03.2025 Bulletin 2025/10**

(21) Application number: **23814806.8**

(22) Date of filing: **18.04.2023**

(51) International Patent Classification (IPC):
**H04W 28/06** (2009.01)

(52) Cooperative Patent Classification (CPC):
**H04L 41/14; H04L 69/04; H04W 28/06**

(86) International application number:
**PCT/CN2023/089025**

(87) International publication number:
**WO 2023/231620 (07.12.2023 Gazette 2023/49)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.06.2022 CN 202210625727**

(71) Applicant: **Huawei Technologies Co., Ltd.
Shenzhen, Guangdong 518129 (CN)**

(72) Inventors:
• **ZHANG, Maojun
  Hangzhou, Zhejiang 310058 (CN)**
• **ZHONG, Caijun
  Hangzhou, Zhejiang 310058 (CN)**
• **ZHANG, Gongzheng
  Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **COMMUNICATION METHOD AND APPARATUS**

(57) This application provides a communication method and apparatus, which can resolve a problem that a model convergence speed is slow due to long communication time in a single round of training, and are applicable to a wireless communication system. The method includes: A first apparatus obtains first duration, where the first duration is a threshold of duration from sending a first model by the first apparatus to receiving a second model of a second apparatus, and the second model is determined based on the first model. The first apparatus sends first indication information to the second apparatus, where the first indication information indicates the first duration. The second apparatus may determine a first compression coefficient based on the first duration, where the first compression coefficient is used by the second apparatus to compress the second model.

FIG. 4

EP 4 518 422 A1

## Description

This application claims priority to Chinese Patent Application No. 202210625727.3, filed with the China National Intellectual Property Administration on June 2, 2022 and entitled "COMMUNICATION METHOD AND APPARATUS", which is incorporated herein by reference in its entirety.

## TECHNICAL FIELD

This application relates to the communication field, and in particular, to a communication method and apparatus.

## BACKGROUND

With development of artificial intelligence technologies, to protect data privacy and security and resolve a data island problem, a machine learning form is changed from a centralized data-based training form to a training manner in which distributed data training is used and then results obtained through the distributed training are summarized, for example, a distributed learning architecture represented by federated learning. In a distributed model training process, model interaction is usually implemented through wireless communication. When a plurality of devices serving as distributed training clients upload models, a model transmission speed is affected by a wireless channel. Therefore, compression processing usually needs to be performed on the models, to reduce communication overheads and communication time.

However, in the distributed model training process, there are a plurality of devices serving as distributed training clients. When performing model merging, a device serving as a merged server needs to receive models uploaded by all the devices serving as distributed training clients, to complete model merging and perform a next round of model training. However, some devices serving as distributed training clients upload models slowly due to reasons such as a poor channel state or an insufficient computing capability. As a result, communication time of a single round is long, increasing model training time, and reducing a model convergence speed.

## SUMMARY

This application provides a communication method and apparatus, to resolve a problem that a model convergence speed is slow due to long communication time in a single round of training.

To achieve the foregoing objective, this application uses the following technical solutions.

According to a first aspect, a communication method is provided. The communication method includes: A first apparatus obtains first duration, where the first duration is a threshold of duration from sending a first model by the first apparatus to receiving a second model of a second apparatus, and the second model is determined based on the first model. The first apparatus sends first indication information to the second apparatus, where the first indication information indicates the first duration. It may be understood that the first apparatus may be a device or a component in the device, for example, a chip or a chip system.

Based on the communication method according to the first aspect, the first apparatus restricts, based on setting of the first duration, duration used from model delivering to model uploading in each round of training, to avoid a problem that a delay in a single round of training is long because some devices upload models slowly, and reduce time in a single round of model training. In addition, the first duration is indicated to all second apparatuses participating in training, so that the second apparatus determines, based on the first duration, time that can be used for model uploading, and process the second model obtained through training. This increases a probability of successful model uploading, reduces entire model training time, and improves a model convergence speed.

In a possible design solution, there are M second apparatuses, M is a positive integer, and M>1. That the first apparatus obtains the first duration may include: The first apparatus determines the first duration based on one or more of the following: channel state information between the first apparatus and the M second apparatuses, computing capability information of the M second apparatuses, and first compression coefficients of the M second apparatuses, where the first compression coefficient is used by the second apparatus to compress the second model. A channel state of the first apparatus and a channel state of the second apparatus may affect a speed of sending and receiving a model, a computing capability of the second apparatus may affect a rate of local training and compression of the model, and a value of the first compression coefficient of the second apparatus may affect time of sending the second model. In this way, the first apparatus may consider impact of the channel state information, the computing capability information, and the first compression coefficient on model training, and may determine appropriate first duration, to limit duration of a single round of training, so that model training time can be reduced.

In another possible design solution, there are M second apparatuses, M is a positive integer, and M>1. That the first apparatus obtains the first duration may include: The first apparatus determines second duration based on one or more of the following: channel state information between the first apparatus and the M second apparatuses, computing capability information of the M second apparatuses, and first compression coefficients of the M second apparatuses, where the first compression coefficient is used by the second apparatus to compress the second model. The first apparatus may determine the first duration based on the second duration and preconfigured first duration quantization information. In this way, quantization processing is performed on the determined second duration based on the first duration quantization information to obtain the first duration, so that communication overheads for sending the first duration can be reduced, and a communication rate can also be increased.

Further, the method according to the first aspect further includes: The first apparatus receives second indication information from the second apparatus, where the second indication information indicates a first compression coefficient used in a current round of processing. In this way, the first apparatus may receive the first compression coefficient used in a current round of training. On one hand, the first apparatus may decompress, based on the first compression coefficient, the second model obtained in the current round of compression processing. On the other hand, may determine, based on the first compression coefficient, first duration used in a next round of training.

In a possible design solution, the method according to the first aspect may further include: The first apparatus determines a correspondence between the first duration and a first compression coefficient, where the first compression coefficient is used by the second apparatus to compress the second model. The first apparatus sends the correspondence between the first duration and the first compression coefficient to the second apparatus. In this way, the first apparatus may determine the correspondence between the first duration and the first compression coefficient, and send the correspondence to the second apparatus, so that the first apparatus and the second apparatus may obtain, based on the correspondence between the first duration and the first compression coefficient, the first duration and the first compression coefficient that are used in the current round of processing. This reduces data processing time and improves a model training speed.

Further, there are M second apparatuses, M is a positive integer, and M>1. That the first apparatus obtains the first duration may include: The first apparatus determines the first duration based on channel state information between the first apparatus and the M second apparatuses and the correspondence between the first duration and the first compression coefficient. In this way, the first apparatus may determine a correspondence between a group of first duration and the first compression coefficient based on the channel state information between the first apparatus and the M second apparatuses, so that the first duration used in the current round of model training can be determined. This reduces computing resources and signaling overheads.

In a possible design solution, the method according to the first aspect may further include: The first apparatus determines the first compression coefficient based on one or more of the following: channel state information between the first apparatus and the second apparatus and first duration. In this way, the first apparatus may determine the first compression coefficient based on the channel state information and/or the first duration, and does not need to receive the first compression coefficient sent by the second apparatus. This reduces signaling overheads and transmission resources.

Further, the method according to the first aspect may further include: The first apparatus obtains, in the first duration, second models obtained by R second apparatuses in the current round of processing, where the second models obtained by the R second apparatuses in the current round of processing are used to determine a first model used in a next round of processing, R is a positive integer, and 1<R≤M. In this way, the first apparatus may receive, based on the first duration, the second model obtained in the current round of processing, and may discard a second model that is obtained in the current round of processing and that is not sent in the first duration. This can avoid a problem that time in a single round of training is long because some devices upload models slowly due to an insufficient computing capability or a poor channel state, and can reduce model training time.

Further, the method according to the first aspect may further include: The first apparatus obtains, based on first compression coefficients used by the R second apparatuses in the current round of processing, second models obtained in the current round of processing. In this way, the first apparatus may perform, by using the received compression coefficient used by the R second apparatuses in the current round of processing, decompression processing on the compressed second model obtained in the current round of processing, so that the first apparatus updates the first model based on the second models obtained by the R second apparatuses in the current round of processing, and performs a next round of training.

According to a second aspect, a communication method is provided. The communication method includes: A second apparatus receives first indication information from a first apparatus, where the first indication information indicates first duration, the first duration is a threshold of duration from sending a first model by the first apparatus to receiving a second model of the second apparatus, and the second model is determined based on the first model. The second apparatus determines a first compression coefficient based on the first duration, where the first compression coefficient is used by the second apparatus to compress the second model. It may be understood that the second apparatus may be a device or a component in a device, for example, a chip or a chip system.

In a possible design solution, the second apparatus determines the first compression coefficient based on channel state information between the first apparatus and the second apparatus and the first duration.

In another possible design solution, that the second apparatus determines the first compression coefficient based on the first duration may include: The second apparatus may determine a second compression coefficient based on channel state information between the first apparatus and the second apparatus and the first duration. The second apparatus determines the first compression coefficient based on the second compression coefficient and preconfigured first compression coefficient quantization information.

Further, the method according to the second aspect may further include: The second apparatus sends second indication information to the first apparatus, where the second indication information indicates a first compression coefficient used in a current round of processing.

In a possible design solution, the method according to the second aspect may further include: The second apparatus receives, from the first apparatus, a correspondence between the first duration and the first compression coefficient.

Further, that the second apparatus determines the first compression coefficient based on the first duration may include: The second apparatus determines the first compression coefficient based on the first duration and the correspondence between the first duration and the first compression coefficient.

Further, the method according to the second aspect may further include: The second apparatus sends, to the first apparatus, a second model obtained in the current round of processing, where the second model obtained in the current round of processing is used to determine a first model used in a next round of processing.

In addition, for technical effects of the method in the second aspect, refer to the technical effects of the method in the first aspect. Details are not described herein again.

According to a third aspect, a communication apparatus is provided. The communication apparatus includes a processing module and a transceiver module. The processing module is configured to obtain first duration, where the first duration is a threshold of duration from sending a first model by the communication apparatus to receiving a second model of a second apparatus according to the third aspect, and the second model is determined based on the first model. The transceiver module is configured to send first indication information to the second apparatus, where the first indication information indicates the first duration.

In a possible design solution, there are M second apparatuses, M is a positive integer, and M>1. The processing module is further configured to determine the first duration based on one or more of the following: channel state information between the communication apparatus and the M second apparatuses, computing capability information of the M second apparatuses, and first compression coefficients of the M second apparatuses according to the third aspect, where the first compression coefficient is used by the second apparatus to compress the second model.

In another possible design solution, there are M second apparatuses, M is a positive integer, and M>1. The processing module is further configured to determine second duration based on one or more of the following: channel state information between the communication apparatus and the M second apparatuses, computing capability information of the M second apparatuses, and first compression coefficients of the M second apparatuses according to the third aspect, where the first compression coefficient is used by the second apparatus to compress the second model. The processing module is further configured to determine the first duration based on the second duration and preconfigured first duration quantization information.

Further, the transceiver module is further configured to receive second indication information from the second apparatus, where the second indication information indicates a first compression coefficient used in a current round of processing.

In a possible design solution, the processing module is configured to determine a correspondence between the first duration and a first compression coefficient, where the first compression coefficient is used by the second apparatus to compress the second model. The transceiver module is configured to send the correspondence between the first duration and the first compression coefficient to the second apparatus.

Further, there are M second apparatuses, M is a positive integer, and M>1. The processing module is further configured to determine the first duration based on channel state information between the communication apparatus and the M second apparatuses according to the third aspect and the correspondence between the first duration and the first compression coefficient.

In a possible design solution, the processing module is further configured to determine the first compression coefficient based on one or more of the following: channel state information between the communication apparatus and the second apparatus according to the third aspect and the first duration.

Further, the processing module is further configured to obtain, in first duration, second models obtained by R second apparatuses in the current round of processing, where the second models obtained by the R second apparatuses in the current round of processing are used to determine a first model used in a next round of processing, R is a positive integer, and $1 < R \leq M$.

Still further, the processing module is further configured to obtain, based on first compression coefficients used by the R second apparatuses in the current round of processing, second models obtained in the current round of processing.

Optionally, the transceiver module may include a receiving module and a sending module. The sending module is configured to implement a sending function of the communication apparatus according to the third aspect, and the receiving module is configured to implement a receiving function of the communication apparatus according to the third aspect.

Optionally, the communication apparatus according to the third aspect may further include a storage module. The storage module stores a program or instructions. When the processing module executes the program or the instructions, the communication apparatus according to the third aspect may be enabled to perform the method according to the first aspect.

It should be noted that the communication apparatus according to the third aspect may be a network device or a terminal device, may be a chip (system) or another part or component that may be disposed in the network device or the terminal device, or may be an apparatus including the network device or the terminal device. This is not limited in this application.

In addition, for technical effects of the communication apparatus according to the third aspect, refer to the technical effects of the method according to the first aspect. Details are not described herein again.

According to a fourth aspect, a communication apparatus is provided. The communication apparatus includes a processing module and a transceiver module. The transceiver module is configured to receive first indication information from a first apparatus, where the first indication information indicates first duration, the first duration is a threshold of duration from sending a first model by the first apparatus to receiving a second model of the communication apparatus according to the fourth aspect, and the second model is determined based on the first model. The processing module is configured to determine a first compression coefficient based on first duration, where the first compression coefficient is used by the communication apparatus according to the fourth aspect to compress the second model.

In a possible design solution, the processing module is further configured to determine the first compression coefficient based on channel state information between the first apparatus and the communication apparatus according to the fourth aspect and the first duration.

In another possible design solution, the processing module is further configured to determine a second compression coefficient based on channel state information between the first apparatus and the communication apparatus according to the fourth aspect and the first duration. The processing module is further configured to determine the first compression coefficient based on the second compression coefficient and preconfigured first compression coefficient quantization information.

Further, the transceiver module is configured to send second indication information to the first apparatus, where the second indication information indicates a first compression coefficient used in a current round of processing.

In a possible design solution, the transceiver module is configured to receive, from the first apparatus, a correspondence between the first duration and the first compression coefficient.

Further, the processing module is configured to determine the first compression coefficient based on the first duration and the correspondence between the first duration and the first compression coefficient.

Further, the transceiver module is configured to send, to the first apparatus, a second model obtained in the current round of processing, where the second model obtained in the current round of processing is used to determine a first model used in a next round of processing.

Optionally, the transceiver module may include a receiving module and a sending module. The sending module is configured to implement a sending function of the communication apparatus according to the fourth aspect, and the receiving module is configured to implement a receiving function of the communication apparatus according to the fourth aspect.

Optionally, the communication apparatus according to the fourth aspect may further include a storage module. The storage module stores a program or instructions. When the processing module executes the program or the instructions, the communication apparatus according to the fourth aspect may be enabled to perform the method according to the second aspect.

It should be noted that the communication apparatus according to the fourth aspect may be a network device or a terminal device, may be a chip (system) or another part or component that may be disposed in the network device or the terminal device, or may be an apparatus including the network device or the terminal device. This is not limited in this application.

In addition, for technical effects of the communication apparatus according to the fourth aspect, refer to the technical effects of the method according to the first aspect. Details are not described herein again.

According to a fifth aspect, a communication apparatus is provided. The communication apparatus includes a processor, where the processor is coupled to a memory. The processor is configured to execute a computer program stored in the memory, so that the communication apparatus according to the fifth aspect can perform the method according to any one of the possible implementations of the first aspect or the second aspect.

In a possible design solution, the communication apparatus according to the fifth aspect may further include a transceiver. The transceiver may be a transceiver circuit or an interface circuit. The transceiver may be used by the communication apparatus according to the fifth aspect to communicate with another communication apparatus.

In this application, the communication apparatus according to the fifth aspect may be the network device in the first aspect or the terminal device in the second aspect, a chip (system) or another part or component that may be disposed in the terminal device or the network device, or an apparatus including the terminal device or the network device.

In addition, for technical effects of the communication apparatus according to the fifth aspect, refer to the technical effects of the method according to the first aspect. Details are not described herein again.

According to a sixth aspect, a communication system is provided. The communication system includes a first apparatus and at least two second apparatuses.

According to a seventh aspect, a computer-readable storage medium is provided. The computer-readable storage medium stores a computer program or instructions. When the computer program or the instructions are run on a computer, the computer is enabled to perform the method according to any one of the possible implementations of the first aspect or the second aspect.

According to an eighth aspect, a computer program product is provided. The computer program product includes a computer program or instructions. When the computer program or the instructions are run on a computer, the computer is enabled to perform the method according to any one of the possible implementations of the first aspect or the second aspect.

## BRIEF DESCRIPTION OF DRAWINGS

FIG. 1 is a diagram of an architecture of a communication system according to an embodiment of this application;
FIG. 2 is a diagram of a structure of model compression processing;
FIG. 3 is a diagram of an architecture of another communication system according to an embodiment of this application;
FIG. 4 is a schematic flowchart of a communication method according to an embodiment of this application;
FIG. 5 is a schematic flowchart of another communication method according to an embodiment of this application;
FIG. 6 is a schematic flowchart of still another communication method according to an embodiment of this application;
FIG. 7 is a curve diagram of a model test precision change according to an embodiment of this application;
FIG. 8 is a curve diagram of another model test precision change according to an embodiment of this application;
FIG. 9 is a diagram of a structure of a communication apparatus according to an embodiment of this application; and
FIG. 10 is a diagram of a structure of another communication apparatus according to an embodiment of this application.

## DESCRIPTION OF EMBODIMENTS

For ease of understanding, the following first describes related technologies in embodiments of this application.

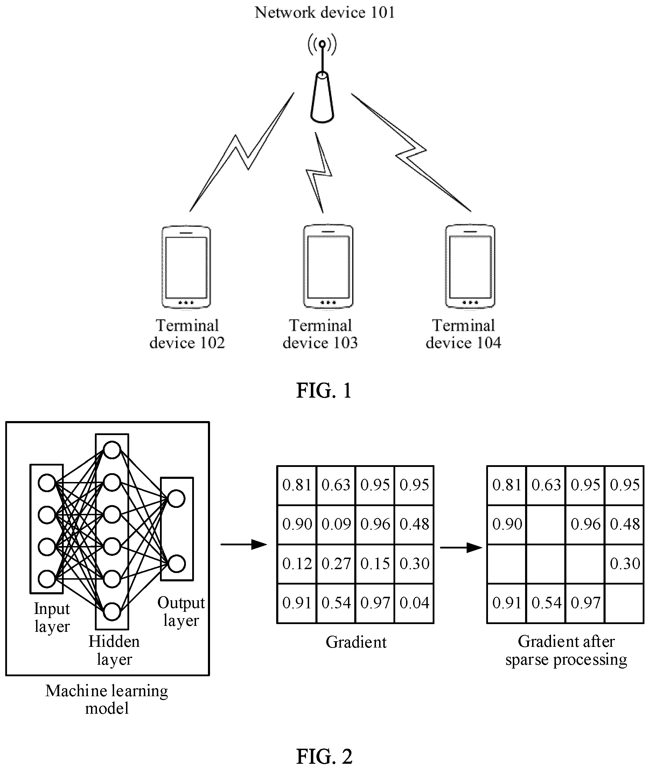

In embodiments of this application, an example in which federated learning is used to implement model training is used for description. For example, FIG. 1 is a diagram of an architecture of a communication system. Federated learning may be implemented based on the communication system. As shown in FIG. 1, the communication system includes a network device and at least two terminal devices. The network device may communicate with any terminal device, and any two terminal devices may also communicate with each other. For example, FIG. 1 shows a network device 101 and a terminal device 102 to a terminal device 104. A quantity of network devices and a quantity of terminal devices are not limited in this embodiment of this application, and may be determined based on different application scenarios or requirements. For example, 101 may alternatively be a terminal device.

In this embodiment of this application, an example in which the network device is used as a federated learning merged server and the terminal device is used as a federated learning client is used for description. In addition, the terminal device may alternatively be used as a federated learning merged server, and the network device may alternatively be used as a federated learning client. This is not limited in this application.

It may be understood that the network device collaborates with a plurality of terminal devices to train a same machine learning model. In other words, the plurality of terminal devices obtain a machine learning model on a terminal device side through training based on a machine learning model sent by the network device, and a machine learning model on a network device side is obtained based on the machine learning model on the terminal device side. In addition, a type of the machine learning model is not specifically limited in this embodiment of this application. For example, the machine learning model may be a classification model, a logistic regression model, or a neural network model.

It should be noted that a machine learning model obtained through training on a side serving as the merged server may be referred to as a global model, and a machine learning model obtained through training on a side serving as the client may be referred to as a local model or a partial model. This is not limited in this embodiment of this application.

When federated learning is performed in the scenario shown in FIG. 1, uploading and delivery of a model or a parameter are performed over a wireless channel. As shown in FIG. 1, one round of federated learning procedure includes the following steps. The network device 101 separately sends a global model to the terminal device 102 to the terminal device 104. The terminal device 102 to the terminal device 104 separately train the received global model by using a local training dataset, to obtain a local model. The terminal device 102 to the terminal device 104 separately perform compression processing on the local model, and upload a compressed local model to the network device 101. The network device 101 then performs model averaging based on the received compressed local models, to obtain an updated global model, and sends the updated global model to the terminal device 102 to the terminal device 104 for a next round of training.

It should be noted that uploading the compressed local model and delivering the updated global model may be represented as uploading and delivering a model parameter, for example, uploading and delivering a weight, or uploading and delivering a gradient.

The terminal device performs compression processing on the local model, that is, compression processing on the model parameter, to reduce communication overheads and a communication delay. Currently, a great degree of compression is usually performed in a manner such as quantization and sparse encoding.

For example, FIG. 2 is a diagram of a structure of model compression processing. As shown in FIG. 2, a machine learning model is a neural network model, and the neural network model includes an input layer, a hidden layer, and an output layer. A terminal device may train the neural network model by using a local training dataset, to obtain a locally trained neural network model (that is, a local model).

Further, the terminal device performs sparse processing on a gradient of the local model, for example, deletes a gradient whose value is less than a specific threshold, and uploads only a gradient whose value is large. However, after some gradients are deleted in this manner, a new error term is brought, increasing model training time, and reducing a model convergence speed.

In addition, it can be learned from the foregoing descriptions that, in each round of distributed training process, when performing model merging, a device (for example, the network device 101) serving as a merged server needs to receive models uploaded by all devices (for example, the terminal device 102 to the terminal device 104) serving as distributed training clients, to complete model merging and perform a next round of model training. However, some devices serving as distributed training clients upload models slowly due to reasons such as a poor channel state or an insufficient computing capability. As a result, communication time of a single round is long, increasing model training time, and reducing a model convergence speed.

Therefore, this embodiment of this application provides a communication method. Training duration of each round of training is set, and an appropriate compression coefficient is determined based on the training duration set in each round of training, to compress and upload a model obtained in each round of training, so that a problem that a model convergence speed is slow due to long communication time in a single round of training can be resolved.

The following describes the technical solutions of this application with reference to the accompanying drawings.

The technical solutions in embodiments of this application may be applied to various communication systems, for example, a narrowband internet of things (narrowband internet of things, NB-IoT) system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access 2000, CDMA) system, a time division-synchronous code division multiple access (time division-synchronization code division multiple access, TD-SCDMA) system, a wireless fidelity (wireless fidelity, Wi-Fi) system, a vehicle-to-everything (vehicle-to-everything, V2X) communication system, a device-to-device (device-to-device, D2D) communication system, an internet of vehicles communication system, a 4th generation (4th generation, 4G) mobile communication system such as a long term evolution (long term evolution, LTE) system or a worldwide interoperability for microwave access (worldwide interoperability for microwave access, WiMAX) communication system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are for representing giving an example, an illustration, or descriptions. Any embodiment or design scheme described as an "example" in this application should not be explained as being more preferred or having more advantages than another embodiment or design scheme. Exactly, the term "example" is used to present a concept in a specific manner.

In embodiments of this application, terms "information (information)", "signal (signal)", "message (message)", "channel (channel)", and "signaling (signaling)" may sometimes be interchangeably used. It should be noted that meanings expressed by the terms are consistent when differences of the terms are not emphasized. "Of (of)", "corresponding (corresponding, relevant)", and "corresponding (corresponding)" may sometimes be used interchangeably. It should be noted that meanings expressed by the terms are consistent when differences of the terms are not emphasized.

In embodiments of this application, a subscript, for example, $W_1$, may sometimes be written in an incorrect form, for example, W1. Expressed meanings are consistent when differences are not emphasized.

In embodiments of this application, the mentioned correspondence, for example, the correspondence in Table 1 to Table 5, may be transferred between communication devices by using indication information, for example, configured by a network device for a terminal device, or may be preset in a communication device. In addition, the correspondence may alternatively be predefined in a protocol. This is not limited in this application.

The network architecture and the service scenario that are described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of new service scenarios, the technical solutions provided in embodiments of this application are also applicable to similar technical problems.

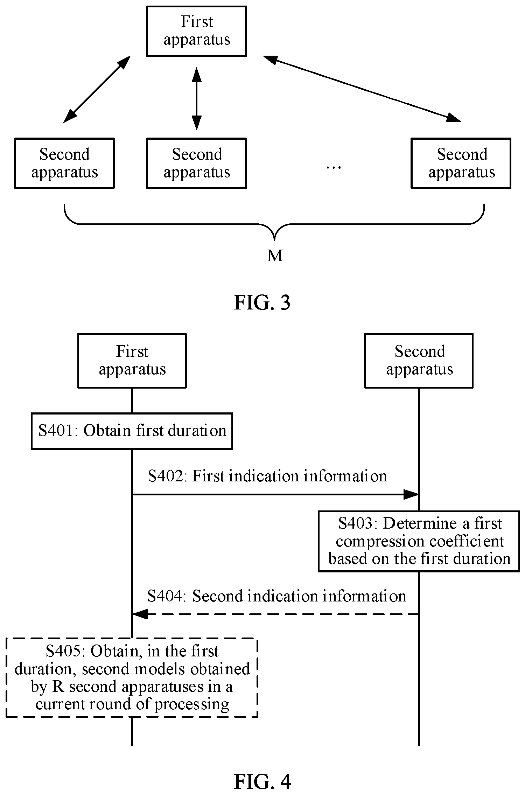

For example, FIG. 3 is a diagram of an architecture of a communication system to which a communication method according to an embodiment of this application is applied. As shown in FIG. 3, the communication system includes a first apparatus and M second apparatuses, where M is a positive integer, and M>1. The first apparatus may communicate with any second apparatus, or any two second apparatuses may communicate with each other. The first apparatus is configured to implement model merging, and the second apparatus may be configured to implement distributed training of a model.

When distributed model training is performed, the first apparatus obtains first duration, where the first duration is a threshold of duration from sending a first model by the first apparatus to receiving a second model of the second apparatus, and the second model is determined based on the first model. In addition, the first apparatus sends first indication information to the second apparatus, where the first indication information indicates the first duration. Then, the second apparatus determines a compression coefficient based on the first duration, where the compression coefficient is used by the second apparatus to compress the second model. For a specific implementation process of the solution, refer to the following method embodiments.

It should be noted that the first model and the second model are a same machine learning model, but parameters of the first model and the second model are different. In each round of training process, that the first apparatus sends the first model may be represented as that the first apparatus sends a model parameter of the first model; that the first apparatus performs model averaging on received compressed second models of the second apparatus may be represented as that the first apparatus performs weighted averaging on model parameters of the compressed second models of the second apparatus; that the second apparatus sends the second model may be represented as that the second apparatus sends the model parameter of the second model; and that the second apparatus compresses the second model may alternatively be represented as that the second apparatus compresses the model parameter of the second model. In other words, sending, receiving, and processing of a model is sending, receiving, and processing of a model parameter.

It may be understood that, based on different training tasks, a structure, a type, a purpose, or the like of a model may be different. For example, the model is used for image classification, and the model may be a neural network model.

In some embodiments, the first apparatus or the second apparatus may be the network device in FIG. 1, or may be a chip (system) or another part or component disposed in the network device, or may be an apparatus including the network device.

In some other embodiments, the first apparatus or the second apparatus may alternatively be the terminal device in FIG. 1, or may be a chip (system) or another part or component disposed in the terminal device, or may be an apparatus including the terminal device.

In still some other embodiments, the first apparatus and the second apparatus may alternatively be a combination of a network device and a terminal device. For example, the first apparatus is a network device, and all the M second apparatuses are terminal devices. For another example, the first apparatus is a terminal device, and all the M second apparatuses are network devices. For still another example, the first apparatus is a terminal device, and the M second apparatuses include both a network device and a terminal device.

The network device is a device having a wireless transceiver function, or a chip or a chip system that may be disposed in the device. The network device includes but is not limited to: an access point (access point, AP), for example, a home gateway, a router, a server, a switch, or a bridge, in a wireless fidelity (wireless fidelity, Wi-Fi) system, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a wireless relay node, a wireless backhaul node, a transmission point (transmission and reception point, TRP or transmission point, TP), or the like. The network device may alternatively be a gNB or a transmission point (TRP or TP) in a 5G system, for example, a new radio (new radio, NR) system, or one antenna panel or a group of antenna panels (including a plurality of antenna panels) of a base station in the 5G system. The network device may alternatively be a network node, for example, a baseband unit (BBU) or a distributed unit (distributed unit, DU), that constitutes a gNB or a transmission point, a road side unit (road side unit, RSU) having a base station function, or the like.

The terminal device is a terminal having a wireless transceiver function, or a chip or a chip system that may be disposed in the terminal. The terminal device may also be referred to as a user apparatus, an access terminal, a subscriber unit, a subscriber station, a mobile station, a remote station, a remote terminal, a mobile device, a user terminal, a terminal, a wireless communication device, a user agent or a user apparatus. The terminal device in embodiments of this application may be a mobile phone (mobile phone), a cellular phone (cellular phone), a smartphone (smartphone), a wireless data card, a personal digital assistant (personal digital assistant, PDA) computer, a wireless modem, a handset (handset), a laptop computer (laptop computer), a tablet computer (Pad), a computer having a wireless transceiver function, a virtual reality (virtual reality, VR) terminal device, an augmented reality (augmented reality, AR) terminal device, a machine type communications (machine type communications, MTC) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation security (transportation safety), a wireless terminal in a smart city (smart city), a wireless terminal in a smart home (smart home), a vehicle-mounted terminal, an RSU having a terminal function, or the like. The terminal device in this application may alternatively be a vehicle-mounted module, a vehicle-mounted module assembly, a vehicle-mounted component, a vehicle-mounted chip, or a vehicle-mounted unit that is built in a vehicle as one or more components or units. The vehicle may use the vehicle-mounted module, the vehicle-mounted module assembly, the vehicle-mounted component, the vehicle-mounted chip, or the vehicle-mounted unit that is built in the vehicle, to implement the method provided in this application.

It should be noted that the communication method provided in embodiments of this application is applicable to the first apparatus and the second apparatus shown in FIG. 3. For a specific implementation, refer to the following method embodiments. Details are not described herein.

It should be noted that, the solutions in embodiments of this application may alternatively be applied to another communication system, and a corresponding name may alternatively be replaced with a name of a corresponding function in the another communication system.

It should be understood that FIG. 1 and FIG. 3 are merely simplified diagrams of examples for ease of understanding. The systems may further include other network devices and/or other terminal devices, which are not shown in FIG. 1 or FIG. 3.

The following describes in detail communication methods provided in embodiments of this application with reference to FIG. 4 to FIG. 8.

For example, FIG. 4 is a schematic flowchart of a communication method according to an embodiment of this application. The communication method is applicable to the system shown in FIG. 1 or FIG. 3, and one round of model training process is used as an example to describe the communication method provided in this embodiment of this application. It should be noted that the one round of model training process described in this embodiment of this application may also be referred to as one round of communication process.

As shown in FIG. 4, the method includes the following steps.

S401: A first apparatus obtains first duration.

The first duration is a threshold of duration from sending a first model by the first apparatus to receiving a second model of a second apparatus. In other words, the first duration may include duration spent by the first apparatus on sending the first model to the second apparatus, duration spent by the second apparatus on training and compressing the first model to obtain the second model, and duration spent by the second apparatus on sending the second model to the first apparatus. In this embodiment of this application, the first duration may be understood as a training duration threshold set by the first apparatus in one round of model training.

It may be understood that, in an actual model training process, one complete round of training process further includes a process in which the first apparatus merges received second models. However, time spent by the first apparatus on merging the received second models to obtain the first model is extremely short. Therefore, duration spent on merging the models is not involved in this embodiment of this application.

It should be noted that there are at least two second apparatuses participating in distributed model training, and a quantity of second apparatuses in this embodiment of this application is represented by M.

The second model is determined based on the first model. It may be understood that the first model and the second model are machine learning models with different model parameters but a same model structure. The second model is obtained by the second apparatus by training the first model by using a local training dataset. The first model is obtained by the first apparatus by merging compressed second models, for example, by performing model averaging on the compressed second models.

For ease of description, in this embodiment of this application, n is used to represent a quantity of training rounds, n is a positive integer, n>1, and an $n^{th}$ round of training process is used to describe the communication method provided in this embodiment of this application.

In a possible case, in a model training process, first duration used in each round of processing may be fixed. In other words, the first duration used in each round of processing is the same. In this case, the first apparatus may determine the first duration before starting model training. The first duration may indicate a training duration threshold used in each round of processing, and first duration used in an $n^{th}$ round of processing is first duration used in a $1^{st}$ round of processing.

In another possible case, in the model training process, the first duration used in each round of processing may be periodically adjusted in a unit of a quantity of rounds. For example, when a channel state is stable, the first apparatus determines that first duration used in a $1^{st}$ round of processing is $T_1$, and five rounds of training are used as an adjustment periodicity. In this case, first duration used in a $2^{nd}$ round of processing to a $5^{th}$ round of processing is still $T_1$; when a $6^{th}$ round of training is performed, first duration used in a $6^{th}$ round of processing may be updated to $T_2$, and in this case, first duration used in a $7^{th}$ round of processing to a $10^{th}$ round of processing is still $T_2$; and by analogy, the process ends until model training is completed. In this case, the first duration may indicate a training duration threshold used in each round of processing in one periodicity.

In still another possible case, in the model training process, the first duration used in each round of processing may alternatively be aperiodically adjusted in a unit of a quantity of rounds. For example, when a channel state is unstable or changes greatly, after the first apparatus determines that first duration used in a $1^{st}$ round of processing is $T_1$, if the channel state changes slightly in a $1^{st}$ round of training process to a $4^{th}$ round of training process, first duration used in a $2^{nd}$ round of processing training to a $4^{th}$ round of processing training may remain unchanged, and is still $T_1$. If the channel state changes greatly in a $5^{th}$ round of training, first duration used in a $5^{th}$ round of processing may be updated to $T_2$. In addition, if the channel state does not change greatly in a $6^{th}$ round of training process to a $12^{th}$ round of training process, first duration used in a $6^{th}$ round of processing to a $12^{th}$ round of processing is still $T_2$. First duration in a subsequent training process may be adjusted aperiodically based on a channel state change until the model training is completed. Because the first duration used in each round of processing of the aperiodic adjustment is unspecified, the first duration indicates a training duration threshold used in a current round of processing (the $n^{th}$ round of processing).

In yet another possible case, in the model training process, the first duration used in each round of processing may be updated round by round, that is, the first duration needs to be updated in each round of training process. In this case, the first duration may alternatively indicate the training duration threshold used in the current round of processing (the $n^{th}$ round of processing). In other words, the first duration used in the $n^{th}$ round of processing is determined during an $n^{th}$ round of training.

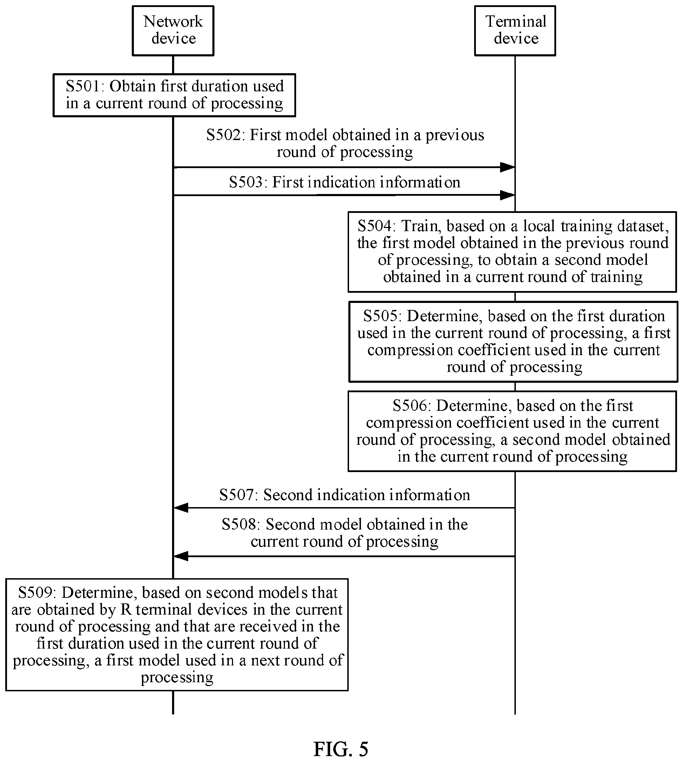

In a possible design solution, the first apparatus may determine the first duration based on one or more of channel state information (channel state information, CSI) between the first apparatus and M second apparatuses, computing capability information of the M second apparatuses, and first compression coefficients of the M second apparatuses. For a specific implementation process, refer to the following method embodiment shown in FIG. 5. Details are not described herein.

The channel state information between the first apparatus and the second apparatus is used to represent a channel state used for model interaction, and may be obtained through channel estimation. For example, channel estimation is performed by using an uplink or downlink reference signal. The reference signal may be a channel state information-reference signal (channel state information-reference signal, CSI-RS), a sounding reference signal (sounding reference signal, SRS), or the like.

In this embodiment of this application, the first apparatus may determine the first duration based on the channel state information between the first apparatus and the M second apparatuses. For example, the first apparatus may process channel state information between the first apparatus and each second apparatus to obtain channel state statistics information, and then determine, based on the channel statistics information, whether an overall channel state is good or poor, to determine first duration of a single round of training. For example, if the channel state is poor, the first apparatus may set the first duration to be longer; or if the channel state is good, the first apparatus may set the first duration to be shorter.

The computing capability information of the second apparatus is used to represent a computing capability of the second apparatus, and may be sent by the second apparatus to the first apparatus. The computing capability information of the second apparatus may be a quantity of floating-point operations per second, time required for local model training for a specific model, or the like. In a possible case, the second apparatus may send the computing capability information to the first apparatus before model training, and may not send the computing capability information in a subsequent training process. In this case, it may be considered that the computing capability information is fixed. In another possible case, the second apparatus may alternatively send the computing capability information to the first apparatus in a training process. In this case, the computing capability information is a computing capability currently reserved by the second apparatus for a training task. In this case, it may be considered that the computing capability information is not fixed.

In this embodiment of this application, the first apparatus may determine the first duration based on the computing capability information of the M second apparatuses. For example, the first apparatus may process the computing capability information of the M second apparatuses to obtain computing capability statistics information, and may determine, based on the computing capability statistics information, an overall computing capability of second apparatuses participating in training. A stronger overall computing capability indicates shorter first duration to be set. On the contrary, a weaker overall computing capability indicates longer first duration to be set.

The first compression coefficient may represent a ratio of a non-zero element to total elements in the model parameter of the second model, that is, a proportion of the non-zero element. In addition to a 1st round of training, the first compression coefficient of the second apparatus that is used by the first apparatus to determine the first duration is a compression coefficient used by the second apparatus to compress a second model obtained in a previous round of training. The first compression coefficient used by each second apparatus in each round of training is determined based on the first duration used in each round of training. In a training process, a first compression coefficient used by each second apparatus in each round may be different, or a same first compression coefficient may be used in one or more consecutive rounds of training. This is not limited in this embodiment of this application.

In addition, when the 1st round of training is performed, the first compression coefficients of the M second apparatuses may be determined by the first apparatus, or the first apparatus and the M second apparatuses through negotiation. Generally, the first compression coefficient used in the 1st round of training may be set to 1.

For example, when the first duration is fixed, the first apparatus may determine the first duration based on the channel state information between the first apparatus and the M second apparatuses and/or the computing capability information of the M second apparatuses before the model training. Because the same first duration is used in each round of training, the first duration may also be referred to as global duration.

For another example, when the first duration changes in each round or is adjusted aperiodically or periodically, the first apparatus may determine, based on the channel state information between the first apparatus and the M second apparatuses, the computing capability information of the M second apparatuses, and the first compression coefficients of the M second apparatuses, the first duration used in the current round of processing or one round of processing in a current periodicity, where the first compression coefficients of the M second apparatuses may be first compression coefficients of the M second apparatuses used in a previous round of processing.

In another possible design solution, the first apparatus may first determine second duration based on one or more of the channel state information between the first apparatus and the M second apparatuses, the computing capability information of the M second apparatuses, and the first compression coefficients of the M second apparatuses, and then determine the first duration based on the second duration and preconfigured first duration quantization information.

The preconfigured first duration quantization information may be determined by the first apparatus and the M second apparatuses through negotiation. The first duration quantization information may be obtained through quantization based on negotiated minimum first duration and maximum first duration. The first duration quantization information is configured or stored in the first apparatus and the M second apparatuses. The first duration quantization information may be stored or configured in a form of a table.

For example, the following Table 1 shows a first duration quantization information indication table. The table includes a correspondence between first indexes and first duration, that is, one first index corresponds to one period of first duration. A first duration value in Table 1 is quantized based on minimum first duration and maximum first duration. For example, $T_{min}$ may represent the minimum first duration determined by the first apparatus and the M second apparatuses through negotiation, $T_{max}$ represents the maximum first duration determined by the first apparatus and the M second apparatuses through negotiation, $\Delta T$ represents a quantization interval of the first duration, Q represents a quantization level of the first duration, Q is determined by the first apparatus and the M second apparatuses through negotiation, and $\Delta T=(T_{max}- T_{min})/ (Q-1)$. Therefore, the first duration is obtained through uniform quantization between $T_{min}$ and $T_{max}$ based on the quantization level and the quantization interval, for example, $T_0=T_{min}$, $T_1=T_{min}+\Delta T$, $T_2=T_{min}+2\times\Delta T$, ..., $T_{Q-1}=T_{max}$.

**Table 1**

| First index | First duration |
|-------------|----------------|
| 0 | $T_0$ |
| 1 | $T_1$ |
| 2 | $T_2$ |
| 3 | $T_3$ |
| ... | ... |
| Q-1 | $T_{Q-1}$ |

Therefore, after the first apparatus obtains the second duration, the first apparatus may search, based on the first duration quantization information indication table shown in Table 1, for first duration whose value is closest to a value of the second duration, and determine the first duration as the first duration used in the current round of processing. For example, if the value of the second duration is closest to a value of first duration corresponding to a first index 2, the first apparatus may determine that the first duration is $T_2$.

In still another possible design solution, the first apparatus determines a correspondence between the first duration and the first compression coefficient. Further, the first apparatus may determine the first duration based on the channel state information between the first apparatus and the M second apparatuses and the correspondence between the first duration and the first compression coefficient. For example, before the model training, the first apparatus may determine the correspondence between the first duration and the first compression coefficient based on the channel state information between the first apparatus and the M second apparatuses and the computing capability information of the M second apparatuses. The first apparatus may compress the correspondence between the first duration and the first compression coefficient into a table, store the table in the first apparatus, and send the correspondence between the first duration and the first compression coefficient to the second apparatus, to configure corresponding information. For example, the following Table 2 shows a correspondence indication table between first duration and first compression coefficients, where T represents the first duration, s represents the first compression coefficient, different periods of first duration correspond to different first compression coefficients, and each correspondence between first duration and a first compression coefficient may correspond to one second index.

**Table 2**

| Second index | First duration T | First compression coefficient s |
|---|---|---|
| 0 | $T_0$ | $s_0$ |
| 1 | $T_1$ | $s_1$ |
| 2 | $T_2$ | $s_2$ |
| 3 | $T_3$ | $s_3$ |
| ... | ... | ... |
| Q-1 | $T_{Q-1}$ | $s_{Q-1}$ |

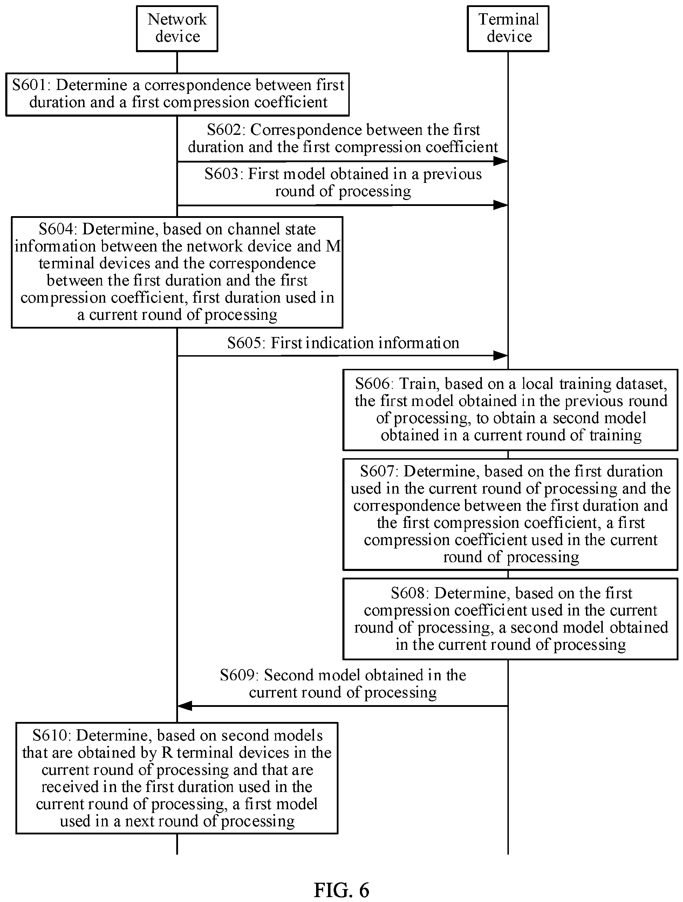

The first apparatus may determine, based on current channel state information between the first apparatus and the M second apparatuses, first duration used in a current round of processing, and may further obtain a first compression coefficient that corresponds to the first duration and that is used in the current round of processing based on a correspondence between the first duration and the first compression coefficient. For example, if the first apparatus determines, based on the channel state information, that the first duration used in the current round of processing is $T_1$, the first compression coefficient used in the current round of processing may be obtained as $s_1$. For a specific implementation process, refer to the following method embodiment shown in FIG. 6. Details are not described herein.

It may be understood that the correspondence between the first duration and the first compression coefficient may alternatively be a correspondence between any two or three of the channel state information, the first duration, and the first compression coefficient. In other words, when any one or two parameters are known, the first apparatus may determine the other two parameters or the third parameter based on the correspondence.

S402: The first apparatus sends the first indication information to the second apparatus. Correspondingly, the second apparatus receives the first indication information from the first apparatus.

The first indication information indicates the first duration. If the first duration is determined through periodic adjustment, the first duration is first duration used in a current periodicity. If the first duration is global duration (same first duration is used in each round), the first duration is first duration used in each round of processing. If the first duration is determined through aperiodic adjustment or determined round by round, the first duration is first duration used in a current round of processing.

In a possible design solution, the first indication information may include the first duration.

When the first duration is determined based on the first duration quantization information or is determined based on the correspondence between the first duration and the first compression coefficient, the first indication information may include first duration indication information, for example, the first index. After receiving the first index, the second apparatus may search, based on an index value of the first index, for example, the index value is 2, the preconfigured first duration quantization information indication table shown in Table 1, to determine first duration corresponding to the index value. For example, the first duration is $T_2$.

When the first duration is determined based on the correspondence between the first duration and the first compression coefficient, optionally, the first indication information may further include the first compression coefficient. In this case, S403 may not be performed.

It may be understood that the first apparatus further sends, to the second apparatus, the first model obtained in the previous round of processing. Correspondingly, the second apparatus receives the first model obtained in the previous round of processing from the first apparatus. The first model obtained in the previous round of processing may be sent together with the first indication information, or may be sent before or after the first indication information. Correspondingly, a start moment of the first duration is a moment at which the first apparatus sends the first model.

Further, after receiving the first model obtained in the previous round of processing, the second apparatus trains, by using the local training dataset, the first model obtained in the previous round of processing, to obtain the second model obtained in the current round of training, and then performs the following S403.

S403: The second apparatus determines the first compression coefficient based on the first duration.

The first compression coefficient is used by the second apparatus to perform compression processing on the second model obtained in the current round of training. For example, the second apparatus may first perform, by using the first compression coefficient, sparse processing on the second model obtained in the current round of training, and then perform encoding processing on the second model obtained through the sparse processing, to obtain the second model obtained in the current round of processing.

In a possible design solution, the second apparatus may determine the first compression coefficient based on one or more of the channel state information between the first apparatus and the second apparatus, the first duration, and a distribution parameter. The distribution parameter indicates a model parameter statistical feature of the second model.

The first duration is the first duration used in the current round of processing, and the distribution parameter is obtained by processing the model parameter of the second model obtained in the current round of training. For example,

$$a = \frac{\left(\sum_{i=1}^{D}|g_i|\right)^2}{D\sum_{i=1}^{D}|g_i|^2}$$

the distribution parameter may be determined according to the following formula:   , where $a$ represents the distribution parameter, D represents a total quantity of model parameters of the second model, $g_i$ represents an $i^{th}$ model parameter of the second model, D and i are positive integers, and $1 \le i \le D$. The distribution parameter may be used to determine the first duration. It should be noted that a distribution parameter obtained in the current round of training may be the same as a distribution parameter obtained in one or more previous rounds of training.

It may be understood that, when the channel state information, and/or the first duration, and/or the distribution parameter are/is basically unchanged, a first compression coefficient used in the current round of processing may be the same as a first compression coefficient used in one or more previous rounds of processing.

In another possible design solution, the second apparatus may determine a second compression coefficient based on one or more of the channel state information between the first apparatus and the second apparatus, the first duration, and the distribution parameter, and then determine the first compression coefficient based on the second compression coefficient and preconfigured first compression coefficient quantization information.

For a process of determining the second compression coefficient, refer to the process of determining the first compression coefficient in the foregoing solution. The preconfigured first compression coefficient quantization information may alternatively be determined by the first apparatus and the second apparatus through negotiation, and the first compression coefficient quantization information may alternatively be stored in the second apparatus in a form of a table. It may be understood that each second apparatus (for example, the M second apparatuses) participating in training has corresponding first compression coefficient quantization information.

For example, the following Table 3 shows a first compression coefficient quantization information indication table, where each third index corresponds to one first compression coefficient. It should be noted that, for a quantization process of the first compression coefficient in the following Table 3, refer to the related descriptions in the foregoing Table 1. Details are not described herein again.

**Table 3**

| Third index | First compression coefficient s |
|---|---|
| 0 | $s_0$ |
| 1 | $s_1$ |
| 2 | $s_2$ |
| 3 | $s_3$ |
| ... | ... |
| Q-1 | $s_{Q-1}$ |

Because the distribution parameter may also be used to determine the first duration, the distribution parameter and the first compression coefficient may be separately or jointly sent to the first apparatus, for example, first compression coefficient and distribution parameter joint quantization information through preconfiguration. For example, the following Table 4 shows a first compression coefficient and distribution parameter joint quantization information indication table. Each fourth index corresponds to one piece of quantization information of the distribution parameter and the first compression coefficient. Similarly, for a quantization process of the distribution parameter and the first compression coefficient in Table 4, refer to the related descriptions in the foregoing Table 1. Details are not described herein again.

**Table 4**

| Fourth index | Distribution parameter a | First compression coefficient s |
|---|---|---|
| 0 | $a_0$ | $s_0$ |
| 1 | $a_1$ | $s_1$ |
| 2 | $a_2$ | $s_2$ |
| 3 | $a_3$ | $s_3$ |
| ... | ... | ... |
| Q-1 | $a_{Q-1}$ | $s_{Q-1}$ |

Therefore, after obtaining the second compression coefficient, the second apparatus may search the first compression coefficient quantization information indication table shown in Table 3 or the first compression coefficient and distribution parameter joint quantization information indication table shown in Table 4 for a first compression coefficient whose value is closest to a value of the second compression coefficient, and use the first compression coefficient whose value is closest to the value of second compression coefficient as the first compression coefficient used in the current round of processing. For example, if the second compression coefficient is closest to $s_1$, $s_1$ is used as the first compression coefficient used in the current round of processing.

In still another possible design solution, the second apparatus may determine the first compression coefficient based on the first duration and the correspondence between the first duration and the first compression coefficient. For example, after receiving the first duration $T_1$, the second apparatus may search the table of the correspondence between first duration and first compression coefficients shown in Table 2 for a first compression coefficient corresponding to $T_1$, for example, $s_1$, to determine the first compression coefficient used in the current round of processing.

In yet another possible design solution, the second apparatus may determine the first compression coefficient based on the first duration and the channel state information between the first apparatus and the second apparatus. For example, the second apparatus is preconfigured with a correspondence between the first duration, the channel state information, and the first compression coefficient. Therefore, the second apparatus may determine, based on the first duration and the channel state information between the first apparatus and the second apparatus, the first compression coefficient used in the current round of processing.

Further, the second apparatus may perform, based on the first compression coefficient used in the current round of processing, compression processing on a second model obtained in the current round of training, to obtain the second model obtained in the current round of processing, and send the second model obtained in the current round of processing to the first apparatus.

Based on the foregoing solution, the first apparatus may restrict, based on setting of the first duration, duration used from model delivering to model uploading in each round of training, to avoid a problem that time in a single round of training is long because some devices upload models slowly, and reduce time in a single round of model training. In addition, the first duration is indicated to all second apparatuses participating in training, so that the second apparatus can determine, based on the first duration, time that can be used for model uploading, and process the second model obtained through training. This increases a probability of successful model uploading, reduces entire model training time, and improves a model convergence speed.

Further, as shown in FIG. 4, the communication method provided in this embodiment of this application further includes the following steps.

S404: The second apparatus sends second indication information to the first apparatus. Correspondingly, the first apparatus receives the second indication information from the second apparatus.

The second indication information indicates a first compression coefficient, and the first compression coefficient is a compression coefficient used in the current round of processing.

In a possible design solution, the second indication information may include the first compression coefficient used in the current round of processing.

When the first compression coefficient is determined based on the first compression coefficient quantization information or determined based on the first compression coefficient and distribution parameter joint quantization information, the second indication information may include first compression coefficient indication information, for example, the third index in Table 3 or the fourth index in Table 4. For example, the first compression coefficient is $s_1$, and a corresponding third index is 1. After receiving the third index, the first apparatus may search Table 3 for a corresponding first compression coefficient based on a value of the third index, to obtain the first compression coefficient used in the current round of processing.

It should be noted that all the M second apparatuses participating in model training send second indication information to the first apparatus, but the first apparatus may not necessarily receive the second indication information of the M second apparatuses in the first duration. A quantity of pieces of received second indication information may be determined based on factors such as the channel state information and the computing capability.

It may be understood that S404 is an optional step. For example, when the first compression coefficient is determined based on the correspondence between the first duration and the first compression coefficient, the second apparatus may not send the second indication information to the first apparatus. For another example, the first apparatus and the second apparatus have a correspondence between any two or three of the channel state information, the first duration, and the first compression coefficient. The first apparatus may determine the first compression coefficient based on the first duration and/or the channel state information between the first apparatus and the second apparatus, and the second apparatus may not send the second indication information to the first apparatus.

S405: The first apparatus obtains, in the first duration, second models obtained by R second apparatuses in the current round of processing.

The second models obtained by the R second apparatuses in the current round of processing are second models obtained by performing decompression processing based on a first compression coefficient used by the R second apparatuses in the current round of processing, R is a positive integer, 1<R≤M, and the second models obtained by the R second apparatuses in the current round of processing are used to determine a first model used in a next round of processing.

The first apparatus receives, in the first duration, compressed second models obtained by the R second apparatuses in the current round of training, and obtains, based on first compression coefficients used by the R second apparatuses in the current round of processing, second models obtained in the current round of processing. For example, the first apparatus decompresses, by using the first compression coefficient used by the R second apparatuses in the current round of processing, the compressed second model obtained in the current round of training, to obtain the second models obtained by the R second apparatuses in the current round of processing.

When duration of the current round of training reaches the first duration, the first apparatus may end receiving of the second model obtained by the second apparatus in the current round of processing, or may continue receiving, but discards a second model that is obtained in the current round of processing and that is received beyond the first duration.

It should be noted that the second indication information in S404 may be sent before the second model is sent, or may be sent together with the second model. This is not limited in this embodiment of this application.

Further, the first apparatus may perform model averaging on the received second models obtained by the R second apparatuses in the current round of processing, to obtain the first model used in the next round of processing, and may determine whether the first model obtained in the current round meets a model convergence condition or a model termination condition. If the first model does not meet the model convergence condition or the model termination condition, S401 to S405 may be repeatedly performed, and until model convergence or model termination is achieved, model training is completed. A model convergence condition may be that a loss value of the first model no longer decreases, and a model termination condition may be that a quantity of model training rounds reaches a maximum, or model training time reaches a training time threshold. This is not limited in this embodiment of this application.

Based on the communication method shown in FIG. 4, the first apparatus restricts, based on the setting of the first duration, the duration used from model delivering to model uploading in each round of training. In addition, the first duration is indicated to all second apparatuses participating in training, so that the second apparatus determines, based on the first duration, a first compression coefficient of a second model obtained through compression training in a current round, increasing an uploading speed and an uploading success probability of the second model. Then, a second model that is obtained through training and that is received beyond the first duration is discarded, and the first model is updated by using a second model obtained in the first duration. This reduces time in a single round of model training, reduces entire model training time, and improves a model convergence speed.

The following describes the communication method provided in this embodiment of this application with reference to a specific application scenario. For example, in the communication scenario shown in FIG. 1, the first duration and the first compression coefficient are alternately updated in each round of training process. The first apparatus may be deployed on the network device shown in FIG. 1, and the second apparatus may be deployed on the terminal device shown in FIG. 2. For example, FIG. 5 is a schematic flowchart of another communication method according to an embodiment of this application.

As shown in FIG. 5, the communication method includes the following steps.

S501: A network device obtains first duration used in a current round of processing.

The first duration used in the current round of processing may be determined based on one or more of channel state information between the network device and M terminal devices, computing capability information of the M terminal devices, and first compression coefficients used by the M terminal devices in a previous round of processing.

For ease of description, in this embodiment of this application, n is used to represent a number of the current round of processing, $T_D^{(n)}$ is used to represent first duration used in an $n^{th}$ round of processing, and $s_m^{(n)}$ is used to represent a first compression coefficient used by a terminal device m in the $n^{th}$ round of processing.

For example, the first duration used in the $n^{th}$ round of processing may be represented as:

$$T_D^{(n)} = T_{U,m}^{(n)} + T_{B,m}^{(n)} + T_{C,m}^{(n)}$$, where $T_{U,m}^{(n)}$ represents time used by the terminal device m to upload a second model in an $n^{th}$ round of training, $T_{B,m}^{(n)}$ represents time used by the terminal device m to receive a first model in the $n^{th}$ round of training, and $T_{C,m}^{(n)}$ represents time used by the terminal device m to obtain a second model in the current round of processing.

When performing the $n^{th}$ round of training, the terminal device m needs to send, in the time $T_D^{(n)}$, the second model obtained in the $n^{th}$ round of processing to the network device. In other words, when $T_D^{(n)}$, $T_{B,m}^{(n)}$, and $T_{C,m}^{(n)}$ are determined, the terminal device m needs to upload, in the time $T_{U,m}^{(n)}$, the second model obtained in the $n^{th}$ round of processing to the network device, that is, $T_{U,m}^{(n)} = T_D^{(n)} - T_{B,m}^{(n)} - T_{C,m}^{(n)}$.

In this embodiment of this application, minimum time for completing model training may be considered, and a target function, that is, $$f1 = \min_{s_m^{(n)}, T_D^{(n)}} T_D^{(n)} N_\epsilon$$, is constructed by optimizing the first duration and the first compression coefficient. The target function $f1$ represents that model training time is minimized by setting the first duration and the first compression coefficient, where $N_\varepsilon$ represents a quantity of training rounds or a quantity of communication rounds that are still required for model convergence. Constraint conditions to meet the target function $f1$ are described as follows.

(1) $E\{F(w^{(n+N_\varepsilon)}) - F(w^*)\} \leq \varepsilon$, where $w^{(n+N_\varepsilon)}$ represents a first model obtained after $N_\varepsilon$ rounds of training continue to be performed, F represents a loss function, $F(w^{(n+N_\varepsilon)})$ represents a loss value of the first model obtained after the $N_\varepsilon$ rounds of training continue to be performed, w* represents an expected optimal first model, $F(w^*)$ represents a loss value of the expected optimal first model, E represents an expectation function, $E\{F(w^{(n+N_\varepsilon)}) - F(w^*)\}$ represents a difference between the loss value of the expected first model obtained after the $N_\varepsilon$ rounds of training continue to be performed and the loss value of the expected optimal first model, $\varepsilon$ represents a loss value difference threshold, $E\{F(w^{(n+N_\varepsilon)}) - F(w^*)\} \leq \varepsilon$ represents that the difference between the loss value of the expected first model obtained after the $N_\varepsilon$ rounds of training continue to be performed and the loss value of the expected optimal first model is less than or equal to the difference threshold, and $\varepsilon$ is a convergence determining criterion.

(2) $T_D^{(n)} \geq \max_m \left\{ T_{B,m}^{(n)} + T_{C,m}^{(n)} \right\}$ represents that a value of the first duration needs to be greater than or equal to a maximum value of a sum of time required for sending the first model and time required for obtaining the second model by the M terminal devices.

(3) $0 \leq s_m^{(n)} \leq 1$, represents that a value of the first compression coefficient used by the terminal device m in the $n^{th}$ round of processing needs to be within [0, 1].

Further, the network device may determine, based on the channel state information between the network device and the M terminal devices, the computing capability information of the M terminal devices, and the first compression coefficients used by the M terminal devices in the previous round of processing, the first duration used in the current round (for example, the $n^{th}$ round) of processing. If n=1, the first compression coefficients used by the M terminal devices in the previous round of processing may be set to 1.

In this case, the first compression coefficient $s_m^{(n)}$ in the target function *f1* is fixed, and the first compression coefficient used in the previous round of processing is used. In this case, the first duration used in the n$^{th}$ round of processing may determine that the target function *f1* is a target function *f2*:

$$f2 = \min_{T_D^{(n)}} T_D^{(n)} N_\epsilon$$

. The target function *f2* represents that when the first compression coefficient is determined, the model training time is minimized by setting the first duration, where $T_D^{(n)} \geq \max_m \left\{ T_{B,m}^{(n)} + T_{C,m}^{(n)} \right\}$ .

Further, the target function *f2* may be rewritten as follows based on the channel state information, the computing capability information, and the like:

$$f2 = \min_{T_D^{(n)}} T_D^{(n)} \sum_{m=1}^{M} d_m^2 \left( 1 + \delta_m^{(n)} \right) e^{\frac{\frac{c_m^{(n)}}{2^{T_D^{(n)} - T_{C,m}^{(n)} - T_{B,m}^{(n)}}} - 1}{\gamma_m}} + B_n T_D^{(n)}$$

In this case, the target function *f2* represents that the first duration is determined to minimize the model training time when impact of the channel state information, the computing capability information, and the like on the model training time is considered. $\delta_m^{(n)} = \frac{a_m}{s_m^{(n)}} - 1$ , $\gamma_m = \frac{P\sigma_m^2}{BN_0}$ , $C_m^{(n)} = \frac{s_m^{(n)} b}{B}$ , $d_m$ represents a ratio of a local training dataset of the terminal device m to all training datasets, $\delta_m^{(n)}$ represents a gradient-related state of the second model obtained by the terminal device m in the n$^{th}$ round of training, $s_m^{(n)}$ represents the first compression coefficient used by the terminal device m in the n$^{th}$ round of processing, $a_m$ represents a gradient statistical feature of a second model obtained by the terminal device m in the previous round of processing, $\gamma_m$ represents a related state of transmission of the terminal device m, B represents a communication bandwidth, $N_0$ represents a noise power spectral density of the terminal device m, P represents a transmission power of the terminal device m, $\sigma_m^2$ represents a channel distribution parameter, $C_m^{(n)}$ represents a channel capacity of the terminal device m in an n$^{th}$ round of transmission, $B_n = \frac{9\mu(n+v)}{8G^{(n)}} \left( F(w^{(n)}) - F(w^*) \right) + \frac{\sigma^2}{G^{(n)}} \sum_{m=1}^{M} d_m^2$ , $B_n$ is used to measure a current training status of the first model, $\mu$ is a constant, v is a parameter of a fractional attenuation learning rate, $G^{(n)}$ represents an estimated maximum gradient norm value of the first model obtained in the n$^{th}$ round of processing, $F(w^{(n)})$ represents a loss value of the first model obtained in the n$^{th}$ round of training, $F(w^*)$ generally approaches 0, and $\sigma^2$ represents a noise term introduced by using a stochastic gradient descent (stochastic gradient descent, SGD) method. The SGD updates a model parameter based on one sample each time. In comparison with updating a model parameter based on all samples, there is a random deviation, which is referred to as noise. The noise may be obtained by using a variance of SGD update estimation performed by the terminal device for a plurality of times based on the local training dataset.

It can be learned that the target function *f2* is a convex function. The network device may search for a zero point of a first order derivative of the target function *f2* by using a dichotomy, or determine, by using a gradient descent method, the first duration used in the current round of processing.

It should be noted that when one or more parameters of the channel state information between the network device and the M terminal devices, the computing capability information of the M terminal devices, and the first compression coefficients used by the M terminal devices in the previous round of processing are known, the first duration may be determined based on the foregoing calculation process.

Optionally, when first duration quantization information is preconfigured by the network device and the terminal device, for example, the first duration quantization information is configured in a form of the first duration quantization information indication table shown in Table 1, the network device may first obtain second duration through calculation based on the target function *f2*, then further search, based on the second duration obtained through calculation, for first duration that is in the first duration quantization information indication table and that is closest to a value of the second duration obtained through calculation, and use the first duration as the first duration used in the current round of processing.

S502: The network device sends, to the terminal device, a first model obtained in the previous round of processing. Correspondingly, the terminal device receives, from the network device, the first model obtained in the previous round of processing.

It may be understood that the network device separately sends, to each terminal device (for example, the M terminal devices) participating in training, the first model obtained in the previous round of processing.

It should be noted that if a number of a current round of training is 1, the first model obtained in the previous round of processing is an initial first model. If a number of the current round of training is greater than 1, for example, 2, the first model obtained in the previous round of processing is a first model obtained in a 1st round of processing. For a specific process of obtaining the first model obtained in the previous round of processing, refer to related descriptions in the following S503 to S507. Details are not described herein.

S503: The network device sends first indication information to the terminal device. Correspondingly, the terminal device receives the first indication information from the network device.

The first indication information may include the first duration used in the current round of processing.

If the first duration used in the current round of processing is further determined based on the first duration quantization information indication table (corresponding to the first duration quantization information) shown in Table 1, the first indication information may include a first index corresponding to the first duration.

Similar to S502, the network device also separately sends the first indication information to each terminal device (for example, the M terminal devices) participating in training. In this embodiment of this application, a sequence of performing S502 and S503 is not limited. For example, S502 and S503 may be performed together, or S503 may be performed before S502.

S504: The terminal device trains, based on the local training dataset, the first model obtained in the previous round of processing, to obtain a second model obtained in the current round of training.

For a specific process in which any one of the M terminal devices trains a model by using the local training dataset, refer to an existing implementation. Details are not described herein.

S505: The terminal device determines, based on the first duration used in the current round of processing, a first compression coefficient used in the current round of processing.

The first compression coefficient used in the current round of processing is used to compress the second model obtained in the current round of training. A first compression coefficient used by any one of the M terminal devices, for example, the terminal device m, in the current round of processing may be determined based on the first duration used in the current round of processing, channel state information between the network device and the terminal device m, and a distribution parameter of the second model obtained in the current round of processing.

For example, when the first duration used in the current round of processing is determined, for the terminal device m, a target function $f3$ may be determined based on the target function $f1$: $$f3 = \min_{s_m^{(n)}} \frac{1+\delta_m^{(n)}}{q_m^{(n)}};$$ , where $0 \leq s_m^{(n)} \leq 1$ . $q_m^{(n)}$ represents a probability that the terminal device m successfully transmits, in the $n^{th}$ round, the second model obtained in the current round of processing (which may be referred to as a probability of successful transmission in the $n^{th}$ round). $q_m^{(n)}$ may be defined as follows: $q_m^{(n)} = Pr\left(C_m^{(n)} \geq R_m^{(n)}\right)$ , where $R_m^{(n)}$ represents a transmission rate at which the terminal device m sends the second model obtained in the $n^{th}$ round of processing, $$R_m^{(n)} = \frac{Dbs_m^{(n)}}{T_{U,m}^{(n)}};$$ , D represents a total quantity of gradient elements of the second model that is obtained in the $n^{th}$ round of processing and that is sent by the terminal device m, and b represents a quantity of bits required by the terminal device m to encode a non-zero element.

Further, assuming that a channel coefficient $h_m^{(n)}$ complies with complex Gaussian distribution (where an amplitude complies with Rayleigh distribution, and a power complies with exponential distribution), for example, $h_m^{(n)} \sim \mathcal{CN}(0, \sigma_m^2)$ , $h_m^{(n)}$ complies with complex Gaussian distribution whose complex Gaussian distribution parameter is $\sigma_m^2$ , and $\left|h_m^{(n)}\right|^2$ complies with exponential distribution of $\lambda = \frac{1}{\sigma_m^2}$ . $q_m^{(n)}$ may be calculated in the

$$q_m^{(n)} = \exp\left(-\frac{BN_0\left(2^{\frac{Dbs_m^{(n)}}{BT_D^{(n)}}}-1\right)}{P_m\sigma_m^2}\right)$$

following manner: , where $P_m$ represents the transmission power of the terminal device m, and $N_0$ represents the noise power spectral density of the terminal device m.

In the target function f3, $\delta_m^{(n)} = \frac{a_m}{s_m^{(n)}} - 1$ . The target function f3 may be rewritten as:

$$f3 = \min_{s_m^{(n)}}\left(\frac{a_m}{s_m^{(n)}}\right)e^{\frac{\left(2^{A_m s_m^{(n)}}-1\right)}{\gamma_m}}$$

, where $\gamma_m = \frac{P\sigma_m^2}{BN_0}$ , $A_m = \frac{Db}{BT_D^{(n)}}$ , and $A_m$ represents a transmission parameter of the second model that is obtained in the current round of processing and that is sent by the terminal device m. It can be learned that the target function f3 is a convex function. The terminal device may alternatively obtain, by using a binary search method, the first compression coefficient used in the current round of processing.

Optionally, when first compression coefficient quantization information is preconfigured for the network device and the terminal device, if the first compression coefficient quantization information is configured in a form shown in Table 3 or Table 4, the network device may first obtain a second compression coefficient through calculation based on the target function f3, then further search, based on the second compression coefficient obtained through calculation, for a first compression coefficient that is in Table 3 or Table 4 and that is closest to a value of the second compression coefficient obtained through calculation, and use the first compression coefficient as the first compression coefficient used in the current round of processing.

S506: The terminal device determines, based on the first compression coefficient used in the current round of processing, a second model obtained in the current round of processing.

For example, the terminal device performs, by using the first compression coefficient used in the current round of processing, compression processing on the second model obtained in the current round of training, where the compression processing includes sparse processing and quantization processing.

For example, first, expected unbiased sparse processing is performed on a model parameter (for example, a gradient) of the second model obtained in the current round of training, and each gradient element of the second model has a specific probability of being discarded. A sparser may be defined as: $S(g) = \left[Z_1\frac{g_1}{p_1}, Z_2\frac{g_2}{p_2}, ..., Z_D\frac{g_D}{p_D}\right]$ , where g represents a vector corresponding to the model parameter, a length of the vector g is D, D represents a total quantity of gradient elements of the second model obtained in the current round of training, $g_i$ represents an ith gradient element in the D gradient elements, $1 \le i \le D$, and $Z_i$ is a random variable that is distributed from 0 to 1 and that has a probability $p_i$ of being 1. When the first compression coefficient is known, an error problem caused by minimizing the sparser may be represented as f4: $f4 = \min_{\{p_i\}}\sum_{i=1}^{D}\frac{|g_i|^2}{p_i}$ , where $\sum_{i=1}^{D}p_i \le s_m^{(n)}D$ , and $p_i \le 1$.

For the foregoing error problem f4, $p_i^* = \min\left\{\frac{|g_i|}{\lambda}, 1\right\}$ , where $\lambda$ is a Lagrange multiplier satisfying $\sum_{i=1}^{D}p_i^* = s_m^{(n)}D$ , and may be obtained by using the binary search method.

Then, sparse vector encoding is performed on the second model that is obtained in the current round of training and on which sparse processing has been performed. For example, for $S(g)$, encoding processing is performed in a manner of location encoding and value encoding. An encoder is represented by $C(\cdot)$. First b1 bits are used to encode a location relative to a previous non-zero element, and last b2 bits are used to encode a value of the non-zero element. Generally, in most federated learning scenarios, a compression coefficient may be extremely small (for example, 0.001). Therefore, when each non-zero element is encoded, a value of the element may be encoded by using as many bits as possible. It may be considered that the sparse vector encoding manner is lossless encoding.

A data compressor constituted based on the foregoing sparser and the encoder includes: $E[Comp_g(g)|g] = g$, and

$$E\left[\|Comp_g(g) - g\|_2^2 \mid g\right] \le \delta \|g\|_2^2$$ , where $\delta \approx \frac{a}{s_m^{(n)}} - 1$ , and $a = \frac{\left(\sum_{i=1}^{D}|g_i|\right)^2}{D\sum_{i=1}^{D}|g_i|^2}$ . $E[Comp_g(g)\mid g] = g$ represents that an expected value of a compressed second model obtained in the current round of training is $g$, that is, the expected value is unbiased. $$E\left[\|Comp_g(g) - g\|_2^2 \mid g\right] \le \delta \|g\|_2^2$$ represents that a variance between a value existing after compression and a value existing before compression is limited. $|Comp_g(g) - g|_2^2$ represents a square of a 2-norm of a difference between a compressed first model and an uncompressed second model, that is, a variance.

Therefore, the second model on which the current round of processing has been performed may be obtained based on the data compressor.

S507: The terminal device sends second indication information to the network device. Correspondingly, the network device receives the second indication information from the terminal device.

The second indication information indicates the first compression coefficient used in the current round of processing. The first indication information may include the first compression coefficient used in the current round of processing.

Optionally, when the first compression coefficient used in the current round of processing is determined based on the first compression coefficient quantization information indication table shown in Table 3 or the first compression coefficient and distribution parameter joint quantization information indication table shown in Table 4, the first indication information may include a third index or a fourth index, and the third index or the fourth index indicates the first compression coefficient.

S508: The terminal device sends, to the network device, the second model obtained in the current round of processing. Correspondingly, the network device receives, from the terminal device, the second model obtained in the current round of processing.

For example, the M terminal devices send, to the network device, second models obtained in the current round of processing. The network device receives the second model based on the first duration used in the current round of processing. The network device may discard a second model received beyond the first duration, or the network device ends receiving the second model after the first duration expires.

S509: The network device determines, based on second models that are obtained by R terminal devices in the current round of processing and that are received in the first duration used in the current round of processing, a first model used in a next round of processing.

The first model used in the next round of processing is a first model obtained by the network device by completing the current round of training.

For example, for the second models that are obtained by the R terminal devices in the current round of processing and that are received in the first duration, the network device first decompresses, by using a corresponding first compression coefficient used in the current round of processing, the second models obtained in the current round of processing, and performs model averaging on decompressed second models that are obtained by the R terminal devices in the current round of processing, to obtain the first model used in the next round of processing. For a specific processing process of model averaging, refer to an existing implementation. Details are not described in this embodiment of this application.

Further, after obtaining the first model used in the next round of processing, the network device may determine whether the first model obtained in the current round meets a model convergence condition or a model termination condition. If the first model does not meet the model convergence condition or the model termination condition, S501 to S509 may be repeatedly performed, and until model convergence or model termination is achieved, model training is completed. A model convergence condition may be that a loss value of the first model no longer decreases, and a model termination condition may be that a quantity of model training rounds reaches a maximum, or model training time reaches a training time threshold. This is not limited in this embodiment of this application.

Based on the model training process in the one round of communication process implemented in S501 to S509, the first duration and the first compression coefficient are updated alternately in each round. In other words, in each round of communication process or training process, the first duration and the first compression coefficient need to be re-determined.

In a plurality of rounds of communication processes, in a possible case, the first duration and the first compression coefficient may alternatively be periodically alternately updated. For example, an update periodicity of the first duration is 10 rounds, and first duration used in a 1st round of communication process may be determined based on the processing process in S501. In the 1st round of communication process, S501 to S503 are performed, but S501 and S503 may not be performed in a subsequent 2nd round of communication process to 10th round of communication process. An update of the first compression coefficient may change with the update periodicity of the first duration. For example, a first compression coefficient used in the 1st round of communication process may be determined based on the processing process in S505, S504 to S509 are performed, and S505 and S507 may not be performed in the subsequent 2nd round of communication process to 10th round of communication process.

In another possible case, the first duration and the first compression coefficient may be updated with a channel state change. When a channel state is good and stable, the first duration may not change after being determined based on S501, and the first compression coefficient may not be changed after being determined based on S505. When the channel state changes, the first duration is updated based on S501, and the first compression coefficient is updated based on S505.

In still another possible case, first duration used in each round of processing may be fixed. The first duration may be determined before a 1st round of communication based on the processing process in S501. In each subsequent round of communication process, S503 and S503 may not be performed. The first compression coefficient may be updated round by round based on a channel state in each round of communication, may be periodically updated based on a channel state, or may be determined based on a specific application scenario. This is not limited in this embodiment of this application.

Based on the communication method shown in FIG. 5, first duration used in a current round of communication may be updated based on a first compression coefficient used in a previous round of communication and current channel state information. A first compression coefficient used in the current round of communication may be determined based on the first duration and the channel state information that are used in the current round of communication. The first duration and the first compression coefficient are updated alternately in real time, and appropriate communication duration and an appropriate compression coefficient are determined for each round of communication, so that communication time used in each round of communication can be reduced. In this way, communication time used for entire model training can be reduced, and a model training speed can be improved.

In the communication method shown in FIG. 5, the terminal device and the network device need to alternately optimize the first duration and the first compression coefficient. In each round of communication process, the first duration and the first compression coefficient need to be calculated and optimized, and a corresponding optimization result needs to be exchanged. FIG. 6 shows still another communication method according to an embodiment of this application, and provides a centralized optimization solution.

As shown in FIG. 6, the communication method includes the following steps.

S601: A network device determines a correspondence between first duration and a first compression coefficient.

The correspondence between the first duration and the first compression coefficient may be the correspondence shown in Table 2, and one period of first duration corresponds to one first compression coefficient.

For example, the network device may determine the correspondence between the first duration and the first compression coefficient based on channel state information between the network device and M terminal devices and computing capability information of the M terminal devices. For a process of determining the correspondence, refer to the related calculation process in S501. Details are not described herein again.

It may be understood that the correspondence between the first duration and the first compression coefficient may alternatively be a correspondence between any two or three of the channel state information, the first duration, and the first compression coefficient. In other words, when any one or two parameters are known, the first apparatus may determine the other two parameters or the third parameter based on the correspondence.

For example, the following Table 5 shows another correspondence indication table between first duration and first compression coefficients. Compared with Table 2, Table 5 establishes a correspondence between the channel state information, the first duration, and the first compression coefficient.

**Table 5**

| Fifth index | Channel state information h | First duration T | First compression coefficient s |
|---|---|---|---|
| 0 | $h_0$ | $T_0$ | $s_0$ |
| 1 | $h_1$ | $T_1$ | $s_1$ |
| 2 | $h_2$ | $T_2$ | $s_2$ |
| 3 | $h_3$ | $T_3$ | $s_3$ |
| ... | ... | ... | ... |
| Q-1 | $h_{Q-1}$ | $T_{Q-1}$ | $s_{Q-1}$ |

S602: The network device sends the correspondence between the first duration and the first compression coefficient to the terminal device. Correspondingly, the terminal device receives, from the network device, the correspondence between the first duration and the first compression coefficient.

For example, the network device may compress the correspondence between the first duration and the first compression coefficient into a form of a table and send the table to the terminal device, as shown in Table 2 or Table 5.

It may be understood that S601 and S602 are performed before model training, and are used to configure the correspondence between the first duration and the first compression coefficient for the network device and the terminal device.

It should be noted that the correspondence between the first duration and the first compression coefficient may alternatively be predefined based on a protocol.

S603: The network device sends, to the terminal device, a first model obtained in a previous round of processing.

S604: The network device determines, based on the channel state information between the network device and the M terminal devices and the correspondence between the first duration and the first compression coefficient, first duration used in a current round of processing.

For example, the correspondence between the first duration and the first compression coefficient is shown in Table 2 or Table 5. In a 1st round of communication process, as shown in Table 3, the network device may determine, based on the channel state information between the network device and the M terminal devices, that the first duration used in the current round of processing is $T_1$. Correspondingly, a first compression coefficient used in the current round of processing may be obtained as $s_1$.

S605: The network device sends first indication information to the terminal device. Correspondingly, the terminal device receives the first indication information from the network device.

The first indication information may include the first duration used in the current round of processing, for example, $T_1$, or may include the first duration indication information, for example, a second index in Table 2 or a fifth index in Table 5.

Optionally, the network device may further send, to the terminal device, the first compression coefficient used in the current round of processing. The first compression coefficient used in the current round of processing may be included in the first indication information and sent together, or may be sent separately from the first indication information. In this case, S607 does not need to be performed.

S606: The terminal device trains, based on a local training dataset, the first model obtained in the previous round of processing, to obtain a second model obtained in the current round of processing.

For a specific process in which any one of the M terminal devices trains a model by using the local training dataset, refer to an existing implementation. Details are not described herein.

S607: The terminal device determines, based on the first duration used in the current round of processing and the correspondence between the first duration and the first compression coefficient, the first compression coefficient used in the current round of processing.

For example, after receiving the first duration used in the current round of processing, for example, $T_1$, the terminal device may search Table 2 or Table 5 for a first compression coefficient corresponding to $T_1$ based on $T_1$. For example, the first compression coefficient is $s_1$.

S608: The terminal device determines, based on the first compression coefficient used in the current round of processing, a second model obtained in the current round of processing.

For a specific implementation process of S608, refer to the related descriptions in S506. Details are not described herein again.

S609: The terminal device sends, to the network device, the second model obtained in the current round of processing. Correspondingly, the network device receives, from the terminal device, the second model obtained in the current round of processing.

For a specific implementation process of S609, refer to the related descriptions in S508. Details are not described herein again.

S610: The network device determines, based on second models that are obtained by R terminal devices in the current round of processing and that are received in the first duration used in the current round of processing, a first model used in a next round of processing.

For a specific implementation process of S610, refer to the related descriptions in S509. Details are not described herein again.

Further, after obtaining the first model used in the next round of processing, the network device may determine whether the first model obtained in the current round meets a model convergence condition or a model termination condition. If the first model does not meet the model convergence condition or the model termination condition, S602 to S610 may be repeatedly performed, and until model convergence or model termination is achieved, model training is completed. A model convergence condition may be that a loss value of the first model no longer decreases, and a model termination condition may be that a quantity of model training rounds reaches a maximum, or model training time reaches a training time threshold. This is not limited in this embodiment of this application.

The foregoing S602 to S610 are a model training process in a one-round communication process. The first duration and the first compression coefficient may also be updated based on channel state information. When a channel state changes slightly or basically remains unchanged, first duration and a first compression coefficient in each round of communication process do not change, and until the channel state changes, the first duration and the first compression coefficient are updated.

Compared with the communication method shown in FIG. 5, based on the communication method shown in FIG. 6, the network device may quickly determine, based on the correspondence between the first duration and the first compression coefficient, the first duration and the first compression coefficient used in the current round of communication, and does not need to receive the first compression coefficient sent by the terminal device. This reduces computing resources and signaling overheads, further reduces communication time for model training, and improves a model training speed.

In this embodiment of this application, an example in which an image classification federated learning task is completed in an orthogonal frequency division multiple access (orthogonal frequency division multiple access, OFDMA) wireless transmission system is used to describe an effect of the communication method provided in this embodiment of this application. The first model and the second model are neural network models. A quantity of parameters in the model is 9756426. Considering that a distance between the terminal device and the network device is evenly distributed between 10 meters and 500, a corresponding path loss function L is: $L=128.1 + 37.6 \log_{10} Z$, where Z represents the distance between the terminal device and the network device. A communication bandwidth, a transmission power, a noise power spectral density, and a quantity of bits of a non-zero element are respectively 1 megahertz (megahertz, MHz), 24 decibels relative to one milliwatt (decibels relative to one milliwatt, dBm), -174 dBm/Hz, and 32. There are 20 terminal devices, and data is distributed in non-independent co-distribution mode.

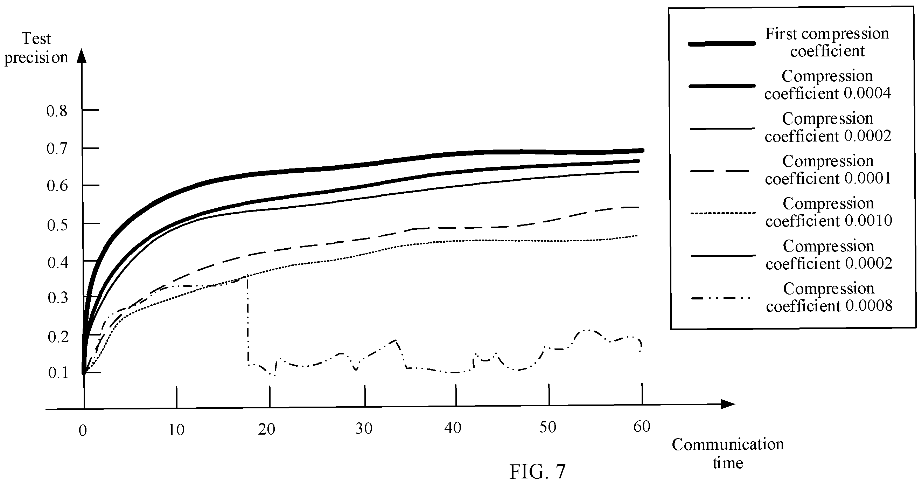

For example, FIG. 7 shows a curve diagram of a model test precision change, which is a curve diagram of an average test precision change of a first model on a test dataset that is obtained based on different compression coefficient design schemes. As shown in FIG. 7, test precision of the first model obtained based on a first compression coefficient determined based on a communication method provided in this embodiment of this application is better than test precision of most first models obtained by using a fixed compression coefficient, and communication time used for model convergence is shorter. It can be learned from FIG. 7 that, when a compression coefficient is excessively small, for example, the compression coefficient is 0.0001, a data compression error is large. This affects convergence of the first model, resulting in low model test precision. When a compression coefficient is too large, for example, the compression coefficient is 0.0010, a large amount of data needs to be transmitted. In this case, transmission interruption is more likely to occur, and model convergence is affected.

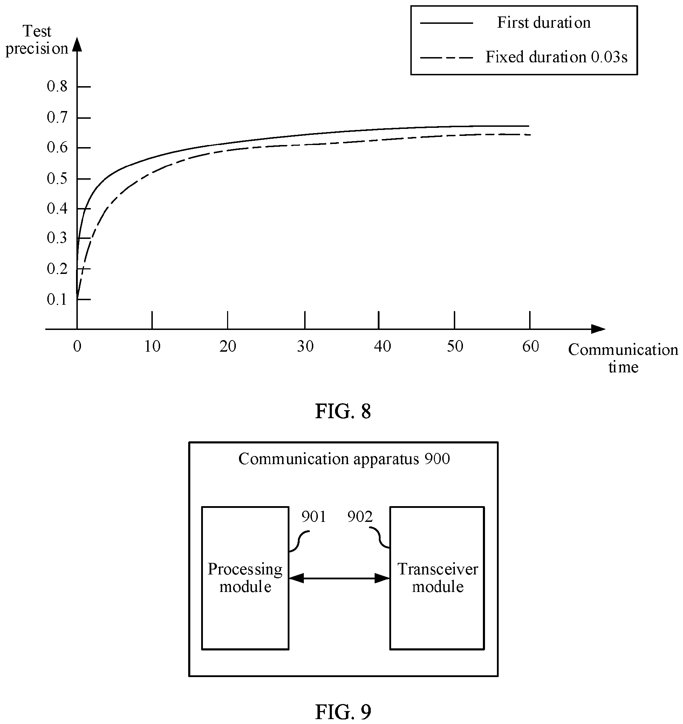

Further, FIG. 8 shows a curve diagram of another model test precision change, which is a curve diagram of an average test precision change of a first model on a test dataset that is obtained based on different first duration design schemes. As shown in FIG. 8, test precision of the first model obtained based on first duration determined in a communication method provided in this embodiment of this application is higher than test precision of a first model obtained based on fixed duration (0.03 second), and a model convergence speed is faster. It can be learned based on the test precision curve change diagrams shown in FIG. 7 and FIG. 8 that, based on the communication method provided in embodiments of this application, model training time can be reduced, and a model convergence speed can be improved.

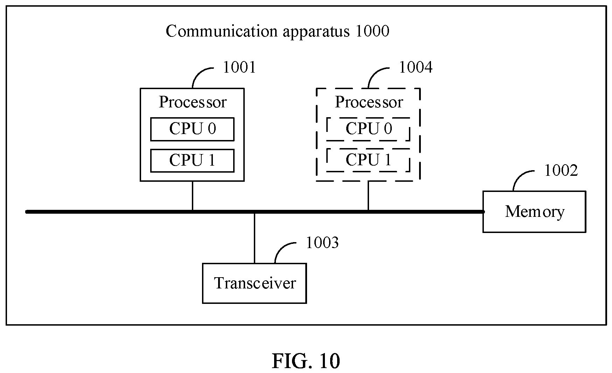

The communication methods provided in embodiments of this application are described above in detail with reference to FIG. 4 to FIG. 8. Communication apparatuses configured to perform the communication methods according to embodiments of this application are described below in detail with reference to FIG. 9 and FIG. 10.

For example, FIG. 9 is a diagram of a structure of a communication apparatus according to an embodiment of this application. As shown in FIG. 9, the communication apparatus 900 includes a processing module 901 and a transceiver module 902. For ease of description, FIG. 9 shows only main components in the communication apparatus.

In some embodiments, the communication apparatus 900 is applicable to the communication system shown in FIG. 1 or FIG. 3, and perform a function of the first apparatus in the communication method shown in FIG. 4, or perform a function of the network device in the communication method shown in either of FIG. 5 or FIG. 6.

The processing module 901 is configured to obtain first duration, where the first duration is a threshold of duration from sending a first model by the communication apparatus 900 to receiving a second model of a second apparatus, and the second model is determined based on the first model. The transceiver module 902 is configured to send first indication information to the second apparatus, where the first indication information indicates the first duration.

In a possible design solution, there are M second apparatuses, M is a positive integer, and M>1. The processing module 901 is further configured to determine the first duration based on one or more of the following: channel state information between the communication apparatus 900 and the M second apparatuses, computing capability information of the M second apparatuses, and first compression coefficients of the M second apparatuses, where the first compression coefficient is used by the second apparatus to compress the second model.

In another possible design solution, there are M second apparatuses, M is a positive integer, and M>1. The processing module 901 is further configured to determine second duration based on one or more of the following: channel state information between the communication apparatus 900 and the M second apparatuses, computing capability information of the M second apparatuses, and first compression coefficients of the M second apparatuses, where the first compression coefficient is used by the second apparatus to compress the second model. The processing module 901 is further configured to determine the first duration based on the second duration and preconfigured first duration quantization information.

Further, the transceiver module 902 is further configured to receive second indication information from the second apparatus, where the second indication information indicates a first compression coefficient used in a current round of processing.

In a possible design solution, the processing module 901 is configured to determine a correspondence between the first duration and a first compression coefficient, where the first compression coefficient is used by the second apparatus to compress the second model. The transceiver module 902 is configured to send the correspondence between the first duration and the first compression coefficient to the second apparatus.

Further, there are M second apparatuses, M is a positive integer, and M>1. The processing module 901 is further configured to determine the first duration based on channel state information between the communication apparatus 900 and the M second apparatuses and the correspondence between the first duration and the first compression coefficient.

In a possible design solution, the processing module 901 is further configured to determine the first compression coefficient based on one or more of the following: channel state information between the communication apparatus 900 and the second apparatus and first duration.

Further, the processing module 901 is further configured to obtain, in the first duration, second models obtained by R second apparatuses in the current round of processing, where the second models obtained by the R second apparatuses in the current round of processing are used to determine a first model used in a next round of processing, R is a positive integer, and 1<R≤M.

Still further, the processing module 901 is further configured to obtain, based on first compression coefficients used by the R second apparatuses in the current round of processing, second models obtained in the current round of processing.

Optionally, the transceiver module 902 may include a receiving module and a sending module (not shown in FIG. 9). The transceiver module is configured to implement a sending function and a receiving function of the communication apparatus 900.

Optionally, the communication apparatus 900 may further include a storage module (not shown in FIG. 9). The storage module stores a program or instructions. When the processing module 901 executes the program or the instructions, the communication apparatus 900 may perform the function of the first apparatus in the communication method shown in FIG. 4, or perform the function of the network device in the communication method shown in FIG. 5 or FIG. 6.

It should be understood that the processing module 901 in the communication apparatus 900 may be implemented by a processor or a processor-related circuit component, and may be a processor or a processing unit. The transceiver module 902 may be implemented by a transceiver or a transceiver-related circuit component, and may be a transceiver or a transceiver unit.

It should be noted that the communication apparatus 900 may be a terminal device or a network device, may be a chip (system) or another part or component that may be disposed in the terminal device or the network device, or may be an apparatus including the terminal device or the network device. This is not limited in this application.

In addition, for technical effects of the communication apparatus 900, refer to the technical effects of the communication method shown in any one of FIG. 4 to FIG. 6. Details are not described herein again.

In some other embodiments, the communication apparatus 900 is applicable to the communication system shown in FIG. 1 or FIG. 3, and perform a function of the second apparatus in the communication method shown in FIG. 4, or perform a function of the terminal device in the communication method shown in either of FIG. 5 or FIG. 6.

The transceiver module 902 is configured to receive first indication information from a first apparatus, where the first indication information indicates first duration, the first duration is a threshold of duration from sending a first model by the first apparatus to receiving a second model of the communication apparatus 900, and the second model is determined based on the first model. The processing module 901 is configured to determine a first compression coefficient based on first duration, where the first compression coefficient is used by the communication apparatus 900 to compress the second model.

In a possible design solution, the processing module 901 is further configured to determine the first compression coefficient based on channel state information between the first apparatus and the communication apparatus 900 and the first duration.

In another possible design solution, the processing module 901 is further configured to determine a second compression coefficient based on channel state information between the first apparatus and the communication apparatus 900 and the first duration: the channel state information between the first apparatus and the communication apparatus 900 and the first duration. The processing module 901 is further configured to determine the first compression coefficient based on the second compression coefficient and preconfigured first compression coefficient quantization information.

Further, the transceiver module 902 is configured to send second indication information to the first apparatus, where the second indication information indicates a first compression coefficient used in a current round of processing.

In a possible design solution, the transceiver module 902 is configured to receive, from the first apparatus, a correspondence between the first duration and the first compression coefficient.

Further, the processing module 901 is configured to determine the first compression coefficient based on the first duration and the correspondence between the first duration and the first compression coefficient.

In a possible design solution, the processing module 901 is configured to determine the first compression coefficient based on the first duration and channel state information between the first apparatus and the communication apparatus 900.

Further, the transceiver module 902 is configured to send, to the first apparatus, a second model obtained in the current round of processing, where the second model obtained in the current round of processing is used to determine a first model used in a next round of processing.

Optionally, the communication apparatus 900 may further include a storage module (not shown in FIG. 9). The storage module stores a program or instructions. When the processing module 901 executes the program or the instructions, the communication apparatus 900 may perform the function of the first apparatus in the communication method shown in FIG. 4, or perform the function of the network device in the communication method shown in FIG. 5 or FIG. 6.

It should be understood that the processing module 901 in the communication apparatus 900 may be implemented by a processor or a processor-related circuit component, and may be a processor or a processing unit. The transceiver module 902 may be implemented by a transceiver or a transceiver-related circuit component, and may be a transceiver or a transceiver unit.

It should be noted that the communication apparatus 900 may be the terminal device or the network device shown in FIG. 1, or may be a chip (system) or another part or component disposed in the terminal device or the network device, or an apparatus including the terminal device or the network device. This is not limited in this embodiment of this application.

In addition, for technical effects of the communication apparatus 900, respectively refer to the technical effects of the communication method shown in any one of FIG. 4 to FIG. 6. Details are not described herein again.

For example, FIG. 10 is a diagram of a structure of another communication apparatus according to an embodiment of this application. The communication apparatus may be a terminal device or a network device, or may be a chip (system) or another part or component that may be disposed in the terminal device or the network device. As shown in FIG. 10, the communication apparatus 1000 may include a processor 1001. Optionally, the communication apparatus 1000 may further include a memory 1002 and/or a transceiver 1003. The processor 1001 is coupled to the memory 1002 and the transceiver 1003, for example, may be connected through a communication bus.

The following describes components of the communication apparatus 1000 in detail with reference to FIG. 10.

The processor 1001 is a control center of the communication apparatus 1000, and may be a processor, or may be a generic term of a plurality of processing elements. For example, the processor 1001 is one or more central processing units (central processing units, CPUs), may be an application-specific integrated circuit (application-specific integrated circuit, ASIC), or is configured as one or more integrated circuits for implementing embodiments of this application, for example, one or more microprocessors (digital signal processors, DSPs) or one or more field programmable gate arrays (field programmable gate arrays, FPGAs).

Optionally, the processor 1001 may perform various functions of the communication apparatus 1000 by running or executing a software program stored in the memory 1002 and invoking data stored in the memory 1002.

During specific implementation, in an embodiment, the processor 1001 may include one or more CPUs, for example, a CPU 0 and a CPU 1 shown in FIG. 10.

During specific implementation, in an embodiment, the communication apparatus 1000 may alternatively include a plurality of processors, for example, the processor 1001 and a processor 1004 in FIG. 10. Each of the processors may be a single-core processor (single-CPU), or may be a multi-core processor (multi-CPU). The processor herein may be one or more devices, circuits, and/or processing cores configured to process data (for example, computer program instructions).

The memory 1002 is configured to store the software program for performing the solutions in this application, and the processor 1001 controls execution of the software program. For a specific implementation, refer to the foregoing method embodiments. Details are not described herein again.

Optionally, the memory 1002 may be a read-only memory (read-only memory, ROM) or another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a compact disc read-only memory (compact disc read-only memory, CD-ROM), or another optical disc storage, an optical disk storage (including a compact disc, a laser disc, an optical disc, a digital versatile disc, a Blu-ray disc, and the like), a magnetic disk storage medium or another magnetic storage device, or any other medium that can be used to carry or store expected program code in an instruction or data structure form and that can be accessed by a computer, but is not limited thereto. The memory 1002 may be integrated with the processor 1001, or may exist independently, and is coupled to the processor 1001 through an interface circuit (not shown in FIG. 10) of the communication apparatus 1000. This is not specifically limited in this embodiment of this application.

The transceiver 1003 is configured for communication with another communication apparatus. For example, the communication apparatus 1000 is a terminal device, and the transceiver 1003 may be configured to communicate with a network device or communicate with another terminal device. For another example, the communication apparatus 1000 is a network device, and the transceiver 1003 may be configured to communicate with a terminal device or communicate with another network device.

Optionally, the transceiver 1003 may include a receiver and a transmitter (not separately shown in FIG. 10). The receiver is configured to implement a receiving function, and the transmitter is configured to implement a sending function.

Optionally, the transceiver 1003 may be integrated with the processor 1001, or may exist independently, and is coupled to the processor 1001 through an interface circuit (not shown in FIG. 10) of the communication apparatus 1000. This is not specifically limited in this embodiment of this application.

It needs to be noted that, the structure of the communication apparatus 1000 shown in FIG. 10 does not constitute a limitation on the communication apparatus. An actual communication apparatus may include more or fewer components than those shown in the figure, combine some components, or have different component arrangement.

In addition, for technical effects of the communication apparatus 1000, refer to the technical effects of the communication method in the foregoing method embodiments. Details are not described herein again.

An embodiment of this application provides a communication system. The communication system includes the foregoing first apparatus and at least two second apparatuses.

An embodiment of this application provides a computer-readable storage medium. The computer-readable storage medium stores computer program code or instructions. When the computer program code or the instructions are run on a computer, the computer is enabled to perform the communication method shown in any one of FIG. 4 to FIG. 6.

An embodiment of this application provides a computer program product. The computer program product includes computer program code or instructions. When the computer program code or the instructions are run on a computer, the computer is enabled to perform the communication method shown in any one of FIG. 4 to FIG. 6.

It should be understood that, the processor in embodiments of this application may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memories, RAMs) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware (for example, a circuit), firmware, or any combination thereof. When the software is used to implement embodiments, all or some of the foregoing embodiments may be implemented in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects, and represents that three relationships may exist. For example, A and/or B may represent the following three cases: Only A exists, both A and B exist, and only B exists. A and B may be singular or plural. In addition, the character "/" in this specification usually represents an "or" relationship between the associated objects, but may also represent an "and/or" relationship. For details, refer to the context for understanding.

In this application, "at least one" means one or more, and "a plurality of" means two or more. "At least one item (piece) of the following" or a similar expression thereof means any combination of these items, including a singular item (piece) or any combination of plural items (pieces). For example, at least one item (piece) of a, b, or c may represent a, b, c, a and b, a and c, b and c, or a, b, and c, where a, b, and c each may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, that is, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:

    obtaining, by a first apparatus, first duration, wherein the first duration is a threshold of duration from sending a first model by the first apparatus to receiving a second model of a second apparatus, and the second model is determined based on the first model; and
    sending, by the first apparatus, first indication information to the second apparatus, wherein the first indication information indicates the first duration.

**2.** The method according to claim 1, wherein there are M second apparatuses, M is a positive integer, and M>1; and the obtaining, by a first apparatus, first duration comprises:
determining, by the first apparatus, the first duration based on one or more of the following: channel state information between the first apparatus and the M second apparatuses, computing capability information of the M second apparatuses, and first compression coefficients of the M second apparatuses, wherein the first compression coefficient is used by the second apparatus to compress the second model.

**3.** The method according to claim 1, wherein there are M second apparatuses, M is a positive integer, and M>1; and the obtaining, by a first apparatus, first duration comprises:

determining, by the first apparatus, second duration based on one or more of the following: channel state information between the first apparatus and the M second apparatuses, computing capability information of the M second apparatuses, and first compression coefficients of the M second apparatuses, wherein the first compression coefficient is used by the second apparatus to compress the second model; and
determining, by the first apparatus, the first duration based on the second duration and preconfigured first duration quantization information.

**4.** The method according to any one of claims 1 to 3, wherein the method further comprises:
receiving, by the first apparatus, second indication information from the second apparatus, wherein the second indication information indicates a first compression coefficient used in a current round of processing.

**5.** The method according to claim 1, wherein the method further comprises:

determining, by the first apparatus, a correspondence between the first duration and a first compression coefficient, wherein the first compression coefficient is used by the second apparatus to compress the second model; and
sending, by the first apparatus, the correspondence between the first duration and the first compression coefficient to the second apparatus.

**6.** The method according to claim 5, wherein there are M second apparatuses, M is a positive integer, and M>1; and the obtaining, by a first apparatus, first duration comprises:
determining, by the first apparatus, the first duration based on channel state information between the first apparatus and the M second apparatuses and the correspondence between the first duration and the first compression coefficient.

**7.** The method according to claim 5 or 6, wherein the method further comprises:
determining, by the first apparatus, the first compression coefficient based on one or more of the following: channel state information between the first apparatus and the second apparatus and the first duration.

**8.** The method according to any one of claims 1 to 7, wherein the method further comprises:
obtaining, by the first apparatus in the first duration, the second models obtained by R second apparatuses in the current round of processing, wherein the second models obtained by the R second apparatuses in the current round of processing are used to determine the first model used in a next round of processing, R is a positive integer, and $1<R\leq M$.

**9.** The method according to claim 8, wherein the method further comprises:
obtaining, by the first apparatus based on first compression coefficients used by the R second apparatuses in the current round of processing, the second models obtained in the current round of processing.

**10.** A communication method, wherein the method comprises:

receiving, by a second apparatus, first indication information from a first apparatus, wherein the first indication information indicates first duration, the first duration is a threshold of duration from sending a first model by the first apparatus to receiving a second model of the second apparatus, and the second model is determined based on the first model; and
determining, by the second apparatus, a first compression coefficient based on the first duration, wherein the first compression coefficient is used by the second apparatus to compress the second model.

11. The method according to claim 10, wherein the determining, by the second apparatus, a first compression coefficient based on the first duration comprises:
determining, by the second apparatus, the first compression coefficient based on channel state information between the first apparatus and the second apparatus and the first duration.

12. The method according to claim 10, wherein the determining, by the second apparatus, a first compression coefficient based on the first duration comprises:

determining, by the second apparatus, a second compression coefficient based on channel state information between the first apparatus and the second apparatus and the first duration; and
determining, by the second apparatus, the first compression coefficient based on the second compression coefficient and preconfigured first compression coefficient quantization information.

13. The method according to any one of claims 10 to 12, wherein the method further comprises:
sending, by the second apparatus, second indication information to the first apparatus, wherein the second indication information indicates the first compression coefficient used in a current round of processing.

14. The method according to claim 10, wherein the method further comprises:
receiving, by the second apparatus from the first apparatus, a correspondence between the first duration and the first compression coefficient.

15. The method according to claim 14, wherein the determining, by the second apparatus, a first compression coefficient based on the first duration comprises:
determining, by the second apparatus, the first compression coefficient based on the first duration and the correspondence between the first duration and the first compression coefficient.

16. The method according to any one of claims 10 to 15, wherein the method further comprises:
sending, by the second apparatus to the first apparatus, the second model obtained in the current round of processing, wherein the second model obtained in the current round of processing is used to determine the first model used in a next round of processing.

17. A communication apparatus, wherein the apparatus comprises a processing module and a transceiver module, wherein

the processing module is configured to obtain first duration, wherein the first duration is a threshold of duration from sending a first model by the communication apparatus to receiving a second model of a second apparatus, and the second model is determined based on the first model; and
the transceiver module is configured to send first indication information to the second apparatus, wherein the first indication information indicates the first duration.

18. The apparatus according to claim 17, wherein there are M second apparatuses, M is a positive integer, and M>1; and
the processing module is further configured to determine the first duration based on one or more of the following: channel state information between the communication apparatus and the M second apparatuses, computing capability information of the M second apparatuses, and first compression coefficients of the M second apparatuses, wherein the first compression coefficient is used by the second apparatus to compress the second model.

19. The apparatus according to claim 17, wherein there are M second apparatuses, M is a positive integer, and M>1;

the processing module is further configured to determine second duration based on one or more of the following: channel state information between the communication apparatus and the M second apparatuses, computing capability information of the M second apparatuses, and first compression coefficients of the M second apparatuses, wherein the first compression coefficient is used by the second apparatus to compress the second model; and
the processing module is further configured to determine the first duration based on the second duration and preconfigured first duration quantization information.

20. The apparatus according to any one of claims 17 to 19, wherein
the transceiver module is further configured to receive second indication information from the second apparatus, wherein the second indication information indicates a first compression coefficient used in a current round of processing.

21. The apparatus according to claim 17, wherein

the processing module is further configured to determine a correspondence between the first duration and a first compression coefficient, wherein the first compression coefficient is used by the second apparatus to compress the second model; and

the transceiver module is further configured to send the correspondence between the first duration and the first compression coefficient to the second apparatus.

22. The apparatus according to claim 21, wherein there are M second apparatuses, M is a positive integer, and M>1; and the processing module is further configured to determine the first duration based on channel state information between the communication apparatus and the M second apparatuses and the correspondence between the first duration and the first compression coefficient.

23. The apparatus according to claim 21 or 22, wherein the processing module is further configured to determine the first compression coefficient based on one or more of the following: channel state information between the communication apparatus and the second apparatus and the first duration.

24. The apparatus according to any one of claims 17 to 23, wherein the processing module is further configured to obtain, in the first duration, the second models obtained by R second apparatuses in the current round of processing, wherein the second models obtained by the R second apparatuses in the current round of processing are used to determine the first model used in a next round of processing, R is a positive integer, and $1 < R \leq M$.

25. The apparatus according to claim 24, wherein the processing module is further configured to obtain, based on first compression coefficients used by the R second apparatuses in the current round of processing, the second models obtained in the current round of processing.

26. A communication apparatus, wherein the apparatus comprises a processing module and a transceiver module, wherein

the transceiver module is configured to receive first indication information from a first apparatus, wherein the first indication information indicates first duration, the first duration is a threshold of duration from sending a first model by the first apparatus to receiving a second model of the communication apparatus, and the second model is determined based on the first model; and

the processing module is configured to determine a first compression coefficient based on the first duration, wherein the first compression coefficient is used by the communication apparatus to compress the second model.

27. The apparatus according to claim 26, wherein the processing module is further configured to determine the first compression coefficient based on channel state information between the first apparatus and the communication apparatus and the first duration.

28. The apparatus according to claim 26, wherein

the processing module is configured to determine a second compression coefficient based on channel state information between the first apparatus and the communication apparatus and the first duration; and

the processing module is configured to determine the first compression coefficient based on the second compression coefficient and preconfigured first compression coefficient quantization information.

29. The apparatus according to any one of claims 26 to 28, wherein the transceiver module is configured to send second indication information to the first apparatus, wherein the second indication information indicates the first compression coefficient used in a current round of processing.

30. The apparatus according to claim 26, wherein the transceiver module is configured to receive, from the first apparatus, a correspondence between the first duration and the first compression coefficient.

31. The apparatus according to claim 30, wherein
the processing module is configured to determine the first compression coefficient based on the first duration and the correspondence between the first duration and the first compression coefficient.

32. The apparatus according to any one of claims 26 to 31, wherein
the transceiver module is configured to send, to the first apparatus, the second model obtained in the current round of processing, wherein the second model obtained in the current round of processing is used to determine the first model used in a next round of processing.

33. A communication apparatus, comprising a processor, wherein the processor is coupled to a memory;

the memory is configured to store a computer program; and
the processor is configured to execute the computer program stored in the memory, to enable the communication apparatus to perform the method according to any one of claims 1 to 16.

34. A computer-readable storage medium, wherein the computer-readable storage medium stores a computer program or instructions, and when the computer program or the instructions are run on a computer, the computer is enabled to perform the method according to any one of claims 1 to 16.

35. A computer program product, wherein the computer program product comprises a computer program or instructions, and when the computer program or the instructions are run on a computer, the computer is enabled to perform the method according to any one of claims 1 to 16.

Network device 101

Terminal device 102

Terminal device 103

Terminal device 104

FIG. 1

| 0.81 | 0.63 | 0.95 | 0.95 |
|------|------|------|------|
| 0.90 | 0.09 | 0.96 | 0.48 |
| 0.12 | 0.27 | 0.15 | 0.30 |
| 0.91 | 0.54 | 0.97 | 0.04 |

Gradient

| 0.81 | 0.63 | 0.95 | 0.95 |
|------|------|------|------|
| 0.90 |      | 0.96 | 0.48 |
|      |      |      | 0.30 |
| 0.91 | 0.54 | 0.97 |      |

Gradient after sparse processing

Input layer

Hidden layer

Output layer

Machine learning model

FIG. 2

First
apparatus

Second
apparatus

Second
apparatus

...

Second
apparatus

M

FIG. 3

First
apparatus

Second
apparatus

S401: Obtain first duration

S402: First indication information

S403: Determine a first
compression coefficient
based on the first duration

S404: Second indication information

S405: Obtain, in the first
duration, second models obtained
by R second apparatuses in a
current round of processing

FIG. 4

Network device

Terminal device

S501: Obtain first duration used in a current round of processing

S502: First model obtained in a previous round of processing

S503: First indication information

S504: Train, based on a local training dataset, the first model obtained in the previous round of processing, to obtain a second model obtained in a current round of training

S505: Determine, based on the first duration used in the current round of processing, a first compression coefficient used in the current round of processing

S506: Determine, based on the first compression coefficient used in the current round of processing, a second model obtained in the current round of processing

S507: Second indication information

S508: Second model obtained in the current round of processing

S509: Determine, based on second models that are obtained by R terminal devices in the current round of processing and that are received in the first duration used in the current round of processing, a first model used in a next round of processing

FIG. 5

Network device

Terminal device

S601: Determine a correspondence between first duration and a first compression coefficient

S602: Correspondence between the first duration and the first compression coefficient

S603: First model obtained in a previous round of processing

S604: Determine, based on channel state information between the network device and M terminal devices and the correspondence between the first duration and the first compression coefficient, first duration used in a current round of processing

S605: First indication information

S606: Train, based on a local training dataset, the first model obtained in the previous round of processing, to obtain a second model obtained in a current round of training

S607: Determine, based on the first duration used in the current round of processing and the correspondence between the first duration and the first compression coefficient, a first compression coefficient used in the current round of processing

S608: Determine, based on the first compression coefficient used in the current round of processing, a second model obtained in the current round of processing

S609: Second model obtained in the current round of processing

S610: Determine, based on second models that are obtained by R terminal devices in the current round of processing and that are received in the first duration used in the current round of processing, a first model used in a next round of processing

FIG. 6

FIG. 7

Test precision (y-axis): 0.1, 0.2, 0.3, 0.4, 0.5, 0.6, 0.7, 0.8

Communication time (x-axis): 0, 10, 20, 30, 40, 50, 60

Legend:
- First compression coefficient
- Compression coefficient 0.0004
- Compression coefficient 0.0002
- Compression coefficient 0.0001
- Compression coefficient 0.0010
- Compression coefficient 0.0002
- Compression coefficient 0.0008

FIG. 8

FIG. 9

Communication apparatus 1000

```
         ┌─ 1001                    ┌─ 1004
   ┌──────────────┐          ┌ ─ ─ ─ ─ ─ ─ ─ ┐
   │  Processor   │            │  Processor   │
   │ ┌──────────┐ │          │ ┌ ─ ─ ─ ─ ─┐ │         ┌─ 1002
   │ │  CPU 0   │ │            │ │  CPU 0   │ │   ┌──────────────┐
   │ ├──────────┤ │          │ └ ─ ─ ─ ─ ─┘ │   │   Memory     │
   │ │  CPU 1   │ │            │ ┌ ─ ─ ─ ─ ─┐ │   └──────────────┘
   │ └──────────┘ │          │ │  CPU 1   │ │
   └──────────────┘            └ ─ ─ ─ ─ ─ ─ ─ ┘
```

1003

Transceiver

FIG. 10

## INTERNATIONAL SEARCH REPORT

| | International application No. |
| --- | --- |
| | **PCT/CN2023/089025** |

**A. CLASSIFICATION OF SUBJECT MATTER**

H04W28/06(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNTXT; CNKI; ENTXTC; DWPI; 3GPP: 模型, 训练, 本地, 融合, 参数, 时长, 压缩, 阈值, 量化, 联邦学习, model, training, local, fusion, parameters, duration, compression, thresholds, quantification, federal learning

**C. DOCUMENTS CONSIDERED TO BE RELEVANT**

| Category* | Citation of document, with indication, where appropriate, of the relevant passages | Relevant to claim No. |
| --- | --- | --- |
| X | CN 110263908 A (SHENZHEN QIANHAI WEBANK CO., LTD.) 20 September 2019 (2019-09-20) description, paragraphs [0005]-[0048] and [0080]-[0111], and figure 2 | 1, 17, 33-35 |
| A | CN 110263908 A (SHENZHEN QIANHAI WEBANK CO., LTD.) 20 September 2019 (2019-09-20) description, paragraphs [0005]-[0048] and [0080]-[0111], and figure 2 | 2-16, 18-32 |
| A | CN 111612153 A (HUAWEI TECHNOLOGIES CO., LTD.) 01 September 2020 (2020-09-01) entire document | 1-35 |
| A | CN 113412494 A (HUAWEI TECHNOLOGIES CO., LTD.) 17 September 2021 (2021-09-17) entire document | 1-35 |
| A | CN 114143799 A (HUAWEI TECHNOLOGIES CO., LTD.) 04 March 2022 (2022-03-04) entire document | 1-35 |
| A | WO 2022041947 A1 (HUAWEI TECHNOLOGIES CO., LTD.) 03 March 2022 (2022-03-03) entire document | 1-35 |

☐ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
| --- | --- |
| **14 June 2023** | **20 June 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2023/089025**

| Patent document cited in search report | | | Publication date (day/month/year) | Patent family member(s) | | | Publication date (day/month/year) |
|---|---|---|---|---|---|---|---|
| CN | 110263908 | A | 20 September 2019 | None | | | |
| CN | 111612153 | A | 01 September 2020 | WO | 2020168761 | A1 | 27 August 2020 |
| CN | 113412494 | A | 17 September 2021 | WO | 2020172825 | A1 | 03 September 2020 |
| CN | 114143799 | A | 04 March 2022 | None | | | |
| WO | 2022041947 | A1 | 03 March 2022 | CN | 114091679 | A | 25 February 2022 |

Form PCT/ISA/210 (patent family annex) (July 2022)

**REFERENCES CITED IN THE DESCRIPTION**

**Patent documents cited in the description**

- CN 202210625727